# EUROPEAN PATENT APPLICATION

(11) **EP 4 564 925 A1**
(43) Date of publication of application: **04.06.2025**
(21) Application number: 23849343.1
(22) Date of filing: 31.07.2023
(51) Int. Cl.: H04W 40/22

(54) **COMMUNICATION METHOD, COMMUNICATION APPARATUS AND COMMUNICATION SYSTEM**

(30) Priority: 02.08.2022 CN 202210920848
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); YAO, Chuting, Shenzhen, Guangdong 518129 (CN)
(74) Representative: Grünecker Patent- und Rechtsanwälte PartG mbB
(86) International application number: PCT/CN2023/110194
(87) International publication number: WO 2024/027636

(57) **Abstract**

This application provides a communication method, a communication apparatus, and a communication system. In the method, when a relay terminal device is configured for a remote terminal device, the remote terminal device receives information about the relay terminal device through an interface between the remote terminal device and an access network device, and then the remote terminal device sends indication information to the relay terminal device, where the indication information can trigger the relay terminal device to enter an RRC connected state, so that the relay terminal device can provide a relay service for the remote terminal device, thereby ensuring that a plurality of paths between the remote terminal device and the access network device are successfully configured for the remote terminal device. This can improve reliability of communication between the remote terminal device and the access network device, and improve quality of service and user experience.

## Description

### CROSS-REFERENCE TO RELATED APPLICATION

This application claims priority to Chinese Patent Application No. 202210920848.0, filed with the China National Intellectual Property Administration on August 2, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In some application scenarios, a relay technology needs to be used. To be specific, one terminal device may assist another terminal device in communicating with an access network device. Specifically, a remote terminal device communicates with the access network device by cooperating with a relay terminal device.

In addition, in some other application scenarios, a plurality of paths may need to be configured for a terminal device. To be specific, a remote terminal device may directly communicate with an access network device, or may communicate with the access network device by cooperating with a relay terminal device.

In a scenario in which a plurality of paths are configured for a terminal device, how to ensure successful multi-path configuration needs to be resolved.

### SUMMARY

This application provides a communication method, a communication apparatus, and a communication system, to ensure that a plurality of paths between a terminal device and an access network device are successfully configured for the terminal device.

According to a first aspect, an embodiment of this application provides a communication method. The method may be performed by a remote terminal device or a module (for example, a chip) used in the remote terminal device. An example in which the remote terminal device performs the method is used. The method includes: The remote terminal device receives a configuration message from an access network device through an interface between the remote terminal device and the access network device, where the configuration message includes information about a relay terminal device, and the configuration message is used for RRC reconfiguration. The remote terminal device sends indication information to the relay terminal device based on the information about the relay terminal device, where the indication information triggers the relay terminal device to enter an RRC connected state.

In the foregoing solution, there is a direct path between the access network device and the remote terminal device. When the relay terminal device is configured for the remote terminal device, the remote terminal device receives the information about the relay terminal device through the interface between the remote terminal device and the access network device, and then the remote terminal device sends the indication information to the relay terminal device, where the indication information can trigger the relay terminal device to enter the RRC connected state, so that the relay terminal device can provide a relay service for the remote terminal device, thereby ensuring that a plurality of paths between the remote terminal device and the access network device are successfully configured for the remote terminal device. This can improve reliability of communication between the remote terminal device and the access network device, and improve quality of service and user experience.

In a possible implementation, the remote terminal device determines, based on an RRC status of the relay terminal device, that the relay terminal device needs to be triggered to enter the RRC connected state.

In this solution, the remote terminal device determines, based on the RRC status of the relay terminal device, whether the relay terminal device needs to be triggered to enter the RRC connected state. If the relay terminal device does not need to be triggered to enter the RRC connected state, the remote terminal device may not need to send the indication information for triggering the relay terminal device to enter the RRC connected state, to reduce signaling overheads. If the relay terminal device needs to be triggered to enter the RRC connected state, the indication information is sent, to ensure that the relay terminal device can be triggered to enter the RRC connected state, thereby ensuring that a plurality of paths between the remote terminal device and the access network device are successfully configured for the remote terminal device. This can improve reliability of communication between the remote terminal device and the access network device, and improve quality of service and user experience.

In a possible implementation, the configuration message further includes status information, and the status information indicates the RRC status of the relay terminal device. The remote terminal device determines the RRC status of the relay terminal device based on the status information.

In this solution, the remote terminal device may accurately learn of the RRC status of the relay terminal device based on the status information. A base station includes the status information in the configuration message, and does not need to include the status information in an additional message, so that signaling overheads can be reduced.

In another implementation, the status information is carried in another message different from the foregoing configuration message and sent to the remote terminal device. A specific manner in which the access network device sends the status information to the remote terminal device is not limited in this application.

In a possible implementation, the indication information is a configuration complete message in response to the configuration message.

In this solution, the configuration complete message is used to trigger the relay terminal device to enter the RRC connected state, and no additional message needs to be sent to trigger the relay terminal device to enter the RRC connected state, so that signaling overheads can be reduced.

In a possible implementation, the remote terminal device sends the configuration complete message to the access network device through the interface between the remote terminal device and the access network device. The interface between the remote terminal device and the access network device may be a Uu air interface.

In a possible implementation, that the remote terminal device sends indication information to the relay terminal device includes: The remote terminal device sends a request message to the relay terminal device, where the request message includes the indication information, the request message is for requesting to set up a unicast connection, and the indication information indicates that the unicast connection is set up to obtain a relay service of the relay terminal device. The request message may be a unicast connection setup request message or a unicast connection setup reply message.

In this solution, the request message carries the indication information, and no additional message needs to be sent to carry the indication information, so that signaling overheads can be reduced.

In a possible implementation, the indication information is a request message for requesting to set up a unicast connection related to a relay service.

In a possible implementation, the indication information is PC5-S signaling, a PC5 RRC message, or sidelink media access control control element SL MAC CE signaling.

In a possible implementation, the remote terminal device determines that a link failure or a connection failure occurs between the remote terminal device and the relay terminal device, and sends first failure indication information to the access network device, where the first failure indication information indicates that a link failure or a connection failure occurs between the remote terminal device and the relay terminal device.

In this solution, after a multi-path configuration process is performed for the remote terminal device or the multi-path configuration is completed, if a connection is set up between the remote terminal device and the relay terminal device, but a link failure or a connection failure occurs between the remote terminal device and the relay terminal device subsequently, the access network device is notified, to help avoid incorrect multi-path configuration. Subsequently, the access network device may reselect a relay terminal device for the remote terminal, and configure a link between the access network device, the new relay terminal device, and the remote terminal device.

In a possible implementation, the remote terminal device determines that a link failure or a connection failure occurs between the remote terminal device and the access network device, and sends second failure indication information to the access network device via the relay terminal device, where the second failure indication information indicates that a link failure or a connection failure occurs between the remote terminal device and the access network device.

In this solution, after a multi-path configuration process is performed for the remote terminal device or the multi-path configuration is completed, if a connection is set up between the remote terminal device and the access network device, but a link failure or a connection failure occurs between the remote terminal device and the access network device subsequently, the access network device is notified, so that the access network device can perform subsequent processing. For example, the access network device may select a suitable cell for the remote terminal device, and configure a link between the remote terminal device and the access network device.

In a possible implementation, the remote terminal device receives third failure indication information from the relay terminal device, where the third failure indication information indicates that a link failure or a connection failure occurs between the relay terminal device and the access network device. The remote terminal device sends fourth failure indication information to the access network device, where the fourth failure indication information indicates that a link failure or a connection failure occurs between the relay terminal device and the access network device.

In this solution, after a multi-path configuration process is performed for the remote terminal device or the multi-path configuration is completed, if a connection is set up between the relay terminal device and the access network device, but a link failure or a connection failure occurs between the relay terminal device and the access network device subsequently, the access network device is notified, so that the access network device can sense in a timely manner that the link between the relay terminal device and the access network device is unavailable, and reselect a relay terminal device and configure a link for the remote terminal device.

In a possible implementation, the remote terminal device sends information about at least one candidate terminal device to the access network device through the interface between the remote terminal device and the access network device, where the at least one candidate terminal device includes the relay terminal device, and the information about the at least one candidate terminal device includes signal quality of the candidate terminal device and/or information indicating whether the candidate terminal device supports multi-path relay.

The information indicating whether the candidate terminal device supports multi-path relay may be indication information or capability information of the candidate terminal device. The capability information indicates that the candidate terminal device supports multi-path relay or does not support multi-path relay.

In the foregoing solution, the remote terminal device provides one or more candidate terminal devices for the access network device, and then the access network device selects one terminal device from the one or more candidate terminal devices as the relay terminal device of the remote terminal device. This helps configure a suitable relay terminal device for the remote terminal device.

In a possible implementation, the remote terminal device receives a discovery message from the candidate terminal device, where the discovery message includes information indicating whether the candidate terminal device supports multi-path relay.

In a possible implementation, the remote terminal device receives a discovery message from the candidate terminal device, where identification information of the candidate terminal device that corresponds to the discovery message indicates whether the candidate terminal device supports multi-path relay.

According to a second aspect, an embodiment of this application provides a communication method. The method may be performed by a relay terminal device or a module (for example, a chip) used in the relay terminal device. An example in which the relay terminal device performs the method is used. The method includes: The relay terminal device receives indication information from a remote terminal device, where the indication information triggers the relay terminal device to enter an RRC connected state. The relay terminal device sends sidelink UE information to an access network device, where the sidelink UE information includes information about the remote terminal device and/or information about the relay terminal device.

In the foregoing solution, the relay terminal device receives the indication information from the remote terminal device, and the indication information can trigger the relay terminal device to enter the RRC connected state, so that the relay terminal device can provide a relay service for the remote terminal device, thereby ensuring that a plurality of paths between the remote terminal device and the access network device are successfully configured for the remote terminal device. This can improve reliability of communication between the remote terminal device and the access network device, and improve quality of service and user experience.

In a possible implementation, the relay terminal device enters the RRC connected state based on the indication information.

In a possible implementation, the indication information is PC5-S signaling, a PC5 RRC message, SL MAC CE signaling, or a configuration complete message from the relay terminal device.

In a possible implementation, that the relay terminal device receives indication information from a remote terminal device includes: The relay terminal device receives a request message from the remote terminal device, where the request message includes the indication information, the request message is for requesting to set up a unicast connection, and the indication information indicates that the unicast connection is set up to obtain a relay service of the relay terminal device.

In this solution, the request message carries the indication information, and no additional message needs to be sent to carry the indication information, so that signaling overheads can be reduced.

In a possible implementation, the indication information is a request message for requesting to set up a unicast connection related to a relay service.

In a possible implementation, the relay terminal device receives notification information from the access network device, where the notification information is for determining whether the relay terminal device needs to forward control plane signaling for the remote terminal device. The relay terminal device determines, based on the notification information, that the control plane signaling needs to be forwarded for the remote terminal device, or that the control plane signaling does not need to be forwarded for the remote terminal device.

In this solution, when the remote terminal device can receive the control plane signaling of the access network device through an interface between the remote terminal device and the access network device, the relay terminal device may not need to monitor and forward, to the relay terminal device, the control plane signaling sent by the access network device, so that signaling overheads of the relay terminal device can be reduced.

In a possible implementation, the relay terminal device determines that a link failure or a connection failure occurs between the relay terminal device and the access network device, and sends failure indication information to the remote terminal device, where the failure indication information indicates that a link failure or a connection failure occurs between the relay terminal device and the access network device.

In a possible implementation, the relay terminal device sends a discovery message to the remote terminal device, where the discovery message includes information indicating that the relay terminal device supports multi-path relay.

In a possible implementation, the relay terminal device sends a discovery message to the remote terminal device, where identification information of the relay terminal device that corresponds to the discovery message indicates that the relay terminal device supports multi-path relay.

According to a third aspect, an embodiment of this application provides a communication method. The method may be performed by an access network device or a module (for example, a chip) used in the access network device. An example in which the access network device performs the method is used. The method includes: The access network device sends a configuration message to a remote terminal device through an interface between the remote terminal device and the access network device, where the configuration message includes information about a relay terminal device and status information, the configuration message is used for RRC reconfiguration, and the status information indicates an RRC status of the relay terminal device. The access network device receives a configuration complete message in response to the configuration message from the remote terminal device through the interface between the remote terminal device and the access network device. The access network device receives sidelink UE information from the relay terminal device, where the sidelink UE information includes the information about the relay terminal device and information about the remote terminal device.

In the foregoing solution, when the access network device configures the relay terminal device for the remote terminal device, the access network device sends, to the remote terminal device, the status information indicating the RRC status of the relay terminal device, so that the remote terminal device can learn of the RRC status of the relay terminal device, the remote terminal device can determine whether to trigger the relay terminal device to enter an RRC connected state, and the relay terminal device can provide a relay service for the remote terminal device, to ensure that a plurality of paths between the remote terminal device and the access network device are successfully configured for the remote terminal device. This can improve reliability of communication between the remote terminal device and the access network device, and improve quality of service and user experience.

In a possible implementation, the access network device receives, from the remote terminal device through the interface between the remote terminal device and the access network device, the configuration complete message in response to the configuration message.

In a possible implementation, the access network device receives, from the remote terminal device via the relay terminal device, the configuration complete message in response to the configuration message. In a possible implementation, the access network device sends notification information to the relay terminal device, where the notification information is for determining whether the relay terminal device needs to forward control plane signaling for the remote terminal device.

In this solution, when the remote terminal device can receive the control plane signaling from the access network device through the interface between the remote terminal device and the access network device, the relay terminal device may not need to monitor and forward, to the relay terminal device, the control plane signaling sent by the access network device, so that signaling overheads of the relay terminal device can be reduced.

In a possible implementation, the access network device receives information about at least one candidate terminal device from the remote terminal device through the interface between the remote terminal device and the access network device, where the information about the at least one candidate terminal device includes signal quality of the candidate terminal device and/or information indicating whether the candidate terminal device supports multi-path relay. The access network device selects the relay terminal device from the at least one candidate terminal device based on the information about the at least one candidate terminal device.

In the foregoing solution, the remote terminal device provides one or more candidate terminal devices for the access network device, and then the access network device selects one terminal device from the one or more candidate terminal devices as the relay terminal device of the remote terminal device. This helps configure a suitable relay terminal device for the remote terminal device.

According to a fourth aspect, an embodiment of this application provides a communication method. The method may be performed by a remote terminal device or a module (for example, a chip) used in the remote terminal device. An example in which the remote terminal device performs the method is used. The method includes: The remote terminal device selects a relay terminal device. The remote terminal device sends an RRC re-setup request message to an access network device. The remote terminal device receives an RRC re-setup message from the access network device. The remote terminal device sends an RRC re-setup complete message to the access network device, where the RRC re-setup complete message includes information about the relay terminal device and/or information about the remote terminal device.

The information about the relay terminal device may include a target layer-2 identifier (L2 ID) of the relay terminal device. The information about the remote terminal device may include a source layer-2 identifier (L2 ID) of the remote terminal device.

In the foregoing solution, after a re-setup procedure of the remote terminal device is completed, the access network device may configure a plurality of paths for the remote terminal device based on the information about the relay terminal device selected by the remote terminal device. This helps implement quick multi-path configuration of the remote terminal device.

In a possible implementation, before the remote terminal device sends the RRC re-setup complete message to the access network device, the remote terminal device sets up a unicast connection between the relay terminal device, and triggers the relay terminal device to report identification information of the relay terminal device and/or identification information of the remote terminal device.

In the foregoing solution, the access network device configures multi-path relay for the remote terminal device based on the information about the relay terminal device and/or the information about the remote terminal device that are/is in the RRC re-setup complete message and the identification information of the relay terminal device and/or the identification information of the remote terminal device that are/is received from the relay terminal device, so that the remote terminal device can set up the multi-path relay with the access network device via the relay terminal device.

In a possible implementation, that the remote terminal device selects a relay terminal device specifically includes: The remote terminal device selects a terminal device, from a cell in which the remote terminal device is located, as the relay terminal device. The relay terminal device may be a terminal device with largest reference signal received power in the cell or any terminal device in the cell.

Certainly, the relay terminal device selected by the remote terminal device and the remote terminal device may be not in a same cell, but the cell in which the remote terminal device is located and a cell in which the relay terminal device is located belong to a same access network device.

According to a fifth aspect, an embodiment of this application provides a communication method. The method may be performed by a remote terminal device or a module (for example, a chip) used in the remote terminal device. An example in which the remote terminal device performs the method is used. The method includes: The remote terminal device determines that a link failure or a connection failure occurs between the remote terminal device and a relay terminal device, and sends first failure indication information to an access network device, where the first failure indication information indicates that a link failure or a connection failure occurs between the remote terminal device and the relay terminal device.

In this solution, if a connection is set up between the remote terminal device and the relay terminal device, but a link failure or a connection failure occurs between the remote terminal device and the relay terminal device subsequently, the access network device is notified, so that the access network device can quickly perform re-setup of a link between the remote terminal device and the relay terminal device, or the access network device reselects a relay terminal device and sets up corresponding multi-path relay. This helps provide high-quality service assurance for the remote terminal device.

In a possible implementation, the remote terminal device determines that a link failure or a connection failure occurs between the remote terminal device and the access network device, and sends second failure indication information to the access network device via the relay terminal device, where the second failure indication information indicates that a link failure or a connection failure occurs between the remote terminal device and the access network device.

In this solution, if a connection is set up between the remote terminal device and the access network device, but a link failure or a connection failure occurs between the remote terminal device and the access network device subsequently, the access network device is notified, so that the access network device can quickly perform re-set up of a link between the remote terminal device and the access network device. This helps provide high-quality service assurance for the remote terminal device.

In a possible implementation, the remote terminal device receives third failure indication information from the relay terminal device, where the third failure indication information indicates that a link failure or a connection failure occurs between the relay terminal device and the access network device. The remote terminal device sends fourth failure indication information to the access network device, where the fourth failure indication information indicates that a link failure or a connection failure occurs between the relay terminal device and the access network device.

In this solution, if a connection is set up between the relay terminal device and the access network device, but a link failure or a connection failure occurs between the relay terminal device and the access network device subsequently, the access network device is notified, so that the access network device can quickly perform re-setup of a link between the relay terminal device and the access network device, or the access network device reselects a relay terminal device and sets up corresponding multi-path relay. This helps provide high-quality service assurance for the remote terminal device.

According to a sixth aspect, an embodiment of this application provides a communication method. The method may be performed by a relay terminal device or a module (for example, a chip) used in the relay terminal device. An example in which the relay terminal device performs the method is used. The method includes: The relay terminal device determines that a link failure or a connection failure occurs between the relay terminal device and an access network device, and sends failure indication information to a remote terminal device, where the failure indication information indicates that a link failure or a connection failure occurs between the relay terminal device and the access network device.

According to a seventh aspect, an embodiment of this application provides a communication method. The method may be performed by an access network device or a module (for example, a chip) used in the access network device. An example in which the access network device performs the method is used. The method includes: The access network device determines whether a relay terminal device needs to forward control plane signaling for a remote terminal device. The access network device sends notification information to the relay terminal device, where the notification information is for determining whether the relay terminal device needs to forward the control plane signaling for the remote terminal device.

In this solution, when the remote terminal device can receive the control plane signaling of the access network device through an interface between the remote terminal device and the access network device, the relay terminal device may not need to monitor and forward, to the relay terminal device, the control plane signaling sent by the access network device, so that signaling overheads of the relay terminal device can be reduced.

In a possible implementation, that the access network device determines whether a relay terminal device needs to forward control plane signaling for a remote terminal device includes: When the remote terminal device can receive the control plane signaling from the access network device through the interface between the remote terminal device and the access network device, the access network device determines that the relay terminal device does not need to forward the control plane signaling for the remote terminal device. When the remote terminal device cannot receive the control plane signaling from the access network device through the interface between the remote terminal device and the access network device, the access network device determines that the relay terminal device needs to forward the control plane signaling for the remote terminal device.

In a possible implementation, the access network device sends a configuration message to the remote terminal device through the interface between the remote terminal device and the access network device, where the configuration message includes information about the relay terminal device and status information, the configuration message is used for RRC reconfiguration, and the status information indicates an RRC status of the relay terminal device. The access network device receives a configuration complete message in response to the configuration message from the remote terminal device through the interface between the remote terminal device and the access network device. The access network device receives sidelink UE information from the relay terminal device, where the sidelink UE information includes the information about the relay terminal device and information about the remote terminal device.

According to an eighth aspect, an embodiment of this application provides a communication method. The method may be performed by a relay terminal device or a module (for example, a chip) used in the relay terminal device. An example in which the relay terminal device performs the method. The method includes: The relay terminal device receives notification information from an access network device, where the notification information is for determining whether the relay terminal device needs to forward control plane signaling for a remote terminal device. The relay terminal device determines, based on the notification information, that the control plane signaling needs to be forwarded for the remote terminal device, or that the control plane signaling does not need to be forwarded for the relay terminal device.

In this solution, when the remote terminal device can receive the control plane signaling of the access network device through an interface between the remote terminal device and the access network device, the relay terminal device may not need to monitor and forward, to the relay terminal device, the control plane signaling sent by the access network device, so that signaling overheads of the relay terminal device can be reduced.

In a possible implementation, the notification information indicates a relay service type provided by the relay terminal device. That the relay terminal device determines, based on the notification information, that the control plane signaling needs to be forwarded for the remote terminal device, or that the control plane signaling does not need to be forwarded for the relay terminal device includes: The relay terminal device determines, based on the relay service type provided by the relay terminal device, that control plane signaling needs to be forwarded for the remote terminal device, or that the control plane signaling does not need to be forwarded for the relay terminal device.

In a possible implementation, the relay terminal device receives indication information from the remote terminal device, where the indication information triggers the relay terminal device to enter an RRC connected state. The relay terminal device sends sidelink UE information to the access network device, where the sidelink UE information includes information about the remote terminal device and/or information about the relay terminal device.

According to a ninth aspect, an embodiment of this application provides a communication apparatus. The apparatus may be a remote terminal device, or may be a chip or a module used in the remote terminal device. The apparatus has a function of implementing any implementation of the first aspect, the fourth aspect, or the fifth aspect. The function may be implemented by hardware, or may be implemented by hardware executing corresponding software. The hardware or the software includes one or more modules corresponding to the foregoing function.

According to a tenth aspect, an embodiment of this application provides a communication apparatus. The apparatus may be a relay terminal device, or may be a chip used in the relay terminal device. The apparatus has a function of implementing any implementation of the second aspect, the sixth aspect, or the eighth aspect. The function may be implemented by hardware, or may be implemented by hardware executing corresponding software. The hardware or the software includes one or more modules corresponding to the foregoing function.

According to an eleventh aspect, an embodiment of this application provides a communication apparatus. The apparatus may be an access network device, or may be a chip used in the access network device. The apparatus has a function of implementing any implementation of the third aspect or the seventh aspect. The function may be implemented by hardware, or may be implemented by hardware executing corresponding software. The hardware or the software includes one or more modules corresponding to the foregoing function.

According to a twelfth aspect, an embodiment of this application provides a communication apparatus, including a processor and an interface circuit. The processor is configured to: communicate with another apparatus via the interface circuit, and perform any implementation of the first aspect to the sixth aspect. There are one or more processors.

According to a thirteenth aspect, an embodiment of this application provides a communication apparatus, including a processor coupled to a memory. The processor is configured to call a program stored in the memory, to perform any implementation of the first aspect to the sixth aspect. The memory may be located inside or outside the apparatus. In addition, there may be one or more processors.

According to a fourteenth aspect, an embodiment of this application provides a communication apparatus, including a processor and a memory. The memory is configured to store computer instructions. When the apparatus runs, the processor executes the computer instructions stored in the memory, to enable the apparatus to perform any implementation of the first aspect to the sixth aspect.

According to a fifteenth aspect, an embodiment of this application provides a communication apparatus, including units or means (means) for performing steps of any implementation of the first aspect to the sixth aspect.

According to a sixteenth aspect, an embodiment of this application further provides a computer-readable storage medium. The computer-readable storage medium stores instructions. When the instructions are run on a communication apparatus, any implementation of the first aspect to the sixth aspect is performed.

According to a seventeenth aspect, an embodiment of this application further provides a computer program product. The computer program product includes a computer program or instructions. When the computer program or the instructions are run by a communication apparatus, any implementation of the first aspect to the sixth aspect is performed.

According to an eighteenth aspect, an embodiment of this application further provides a chip system, including a processor. The processor is configured to perform any implementation of the first aspect to the sixth aspect.

According to a nineteenth aspect, an embodiment of this application further provides a communication system, including a remote terminal device configured to perform the method in any implementation of the first aspect and a relay terminal device configured to perform the method in any implementation of the second aspect.

In a possible implementation, the communication system further includes an access network device configured to perform any implementation of the third aspect.

According to a twentieth aspect, an embodiment of this application further provides a communication system, including an access network device configured to perform any implementation of the seventh aspect and a relay terminal device configured to perform any implementation of the eighth aspect.

### BRIEF DESCRIPTION OF DRAWINGS

FIG. 1 is a diagram of an architecture of a communication system to which an embodiment of this application is applied;
FIG. 2 is a diagram of a communication architecture of SL U2N relay;
FIG. 3 is a diagram of a protocol stack of L2SL U2N relay;
FIG. 4 is a diagram of a communication architecture of multi-path relay;
FIG. 5 is a diagram of an architecture of a protocol stack of multi-path relay;
FIG. 6(a) is a schematic flowchart of a communication method according to an embodiment of this application;
FIG. 6(b) is a schematic flowchart of a communication method according to an embodiment of this application;
FIG. 6(c) is a schematic flowchart of a communication method according to an embodiment of this application;
FIG. 6(d) is a schematic flowchart of a communication method according to an embodiment of this application;
FIG. 6(e) is a schematic flowchart of a communication method according to an embodiment of this application;
FIG. 6(f) is a schematic flowchart of a communication method according to an embodiment of this application;
FIG. 7 is a schematic flowchart of a communication method according to an embodiment of this application;
FIG. 8(a) is a diagram of a PC5 RLF occurring between a remote UE and a relay UE;
FIG. 8(b) is a diagram of a link failure occurring between a remote UE and a relay UE;
FIG. 8(c) is a diagram of a Uu RLF occurring between a relay UE and a base station;
FIG. 8(d) is a diagram of an RRC setup failure occurring between a relay UE and a base station;
FIG. 8(e) is a diagram of an RRC setup failure occurring between a relay UE and a base station;
FIG. 9 is a schematic flowchart of a communication method according to an embodiment of this application;
FIG. 10 is a diagram of a communication apparatus according to an embodiment of this application;
FIG. 11 is a diagram of a communication apparatus according to an embodiment of this application; and
FIG. 12 is a diagram of a structure of a terminal device.

### DESCRIPTION OF EMBODIMENTS

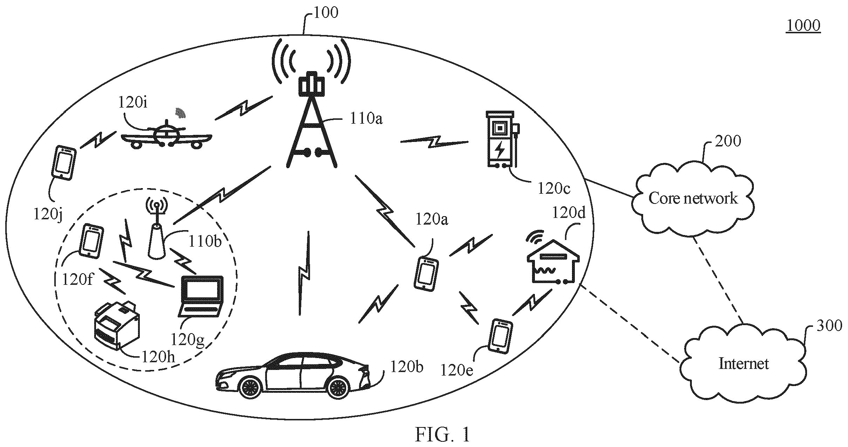

FIG. 1 is a diagram of an architecture of a communication system to which an embodiment of this application is applied. The communication system 1000 includes a radio access network 100 and a core network 200. Optionally, the communication system 1000 may further include an internet 300. The radio access network 100 includes at least one access network device, for example, 110a and 110b in FIG. 1, and further includes at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle. A same terminal device or access network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120b may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

The terminal device is connected to the access network device, and the access network device is connected to the core network. The core network device and the access network device may be different physical devices that are independent of each other, or functions of the core network device and logical functions of the access network device may be integrated into a same physical device, or some functions of the core network device and some functions of the access network device may be integrated into one physical device. Terminal devices may be connected to each other in a wired or wireless manner, and access network devices may be connected to each other in a wired or wireless manner. FIG. 1 is only a diagram. The communication system may further include other network devices, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The access network device may alternatively be a module or unit that completes some functions of a base station, for example, may be a central unit (central unit, CU), or may be a distributed unit (distributed unit, DU). The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in embodiments of this application. In this embodiment of this application, an example in which the base station is used as the access network device is used for description.

A terminal device may also be referred to as a terminal, a user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearing scenario, a smart transportation scenario, and a smart city scenario. The terminal device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The base station and the UE may be fixed or movable. The base station and the UE may be deployed on land, including an indoor or outdoor scenario, and a handheld or vehicle-mounted scenario; or may be deployed on water; or may be deployed on an airplane, a balloon, and an artificial satellite in the air. Application scenarios of the base station and the UE are not limited in embodiments of this application.

Roles of the base station and the UE may be relative. For example, the helicopter or the uncrewed aerial vehicle 120i in FIG. 1 may be configured as a mobile base station, and for 120j accessing the radio access network 100 over 120i, 120i is the base station. However, for the base station 110a, 120i is the UE, to be specific, communication between 110a and 120i is performed according to a radio air interface protocol. Certainly, the communication between 110a and 120i may alternatively be performed according to an interface protocol between base stations. In this case, for 110a, 120i is also the base station. Therefore, the base station and the UE may be collectively referred to as communication apparatuses, 110a and 110b in FIG. 1 each may be referred to as a communication apparatus having a base station function, and 120a to 120j in FIG. 1 each may be referred to as a communication apparatus having a UE function.

Communication between a base station and a UE, between base stations, and between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource for wireless communication is not limited in embodiments of this application.

For ease of understanding the solutions in embodiments of this application, terminologies or terms in embodiments of this application are first described below.

### 1. Sidelink (sidelink) communication

In a wireless communication system, data communication may be performed between UEs by using a network, or communication between UEs may be directly performed without using a network. An interface between UEs is referred to as a PC5 interface, similar to a Uu interface between a UE and a base station. A link between UEs is referred to as a sidelink. A typical application scenario of sidelink communication is vehicle-to-everything (vehicle-to-everything, V2X). In the vehicle-to-everything, each vehicle is one UE, and data transmission may be directly performed between UEs via a sidelink but not via a network. In this way, a communication delay can be effectively reduced. It may be understood that the sidelink may also be referred to as a sidelink, a sidelink, a sidelink, or the like.

### 2. Broadcast, unicast, and multicast on a sidelink

Broadcast communication on the sidelink is similar to broadcasting system information by a base station. To be specific, a UE sends data of a broadcast service to the outside without encrypting the data, and any other UE in an effective receiving range that is interested in the broadcast service can receive the data of the broadcast service.

Unicast communication on the sidelink is similar to data communication performed after a radio resource control (radio resource control, RRC) connection is set up between the UE and the base station, and a unicast connection needs to be first set up between two UEs. After the unicast connection is set up, the two UEs may perform data communication based on a negotiated identifier, and data may be encrypted or may not be encrypted.

Multicast communication on the sidelink means communication between all UEs in a communication group, and any UE in the group can receive and send data of a multicast service.

Embodiments of this application mainly focus on the unicast communication on the sidelink. One time of unicast communication on the sidelink corresponds to a pair: a source layer-2 identifier (source layer-2 identifier, source L2 ID) and a destination layer-2 identifier (destination layer-2 identifier, destination L2 ID). A subheader of each media access control layer data protocol unit (media access control protocol data unit, MAC PDU) on the sidelink generally includes the source L2 ID and the destination L2 ID, so that data can be transmitted from a transmit end to a correct receive end.

### 3. Radio bearer (Radio Bearer, RB)

The radio bearer is a general term of a series of protocol entities and configurations allocated by a base station to a UE, including a series of resources allocated by a packet data convergence protocol (packet data convergence protocol, PDCP) entity, a radio link control (radio link control, RLC) protocol entity, a media access control (media access control, MAC) protocol entity, and a physical layer (PHY). The radio bearer includes a data radio bearer (data radio bearer, DRB) and a signaling radio bearer (signaling radio bearer, SRB). The former is for carrying data, and the latter is for carrying a signaling message. In a sidelink communication scenario, communication between UEs is performed via a sidelink radio bearer (sidelink radio bearer, SLRB), including a sidelink DRB and a sidelink SRB. In the protocol text, the radio bearer configuration generally includes only configurations in a PDCP layer and a service data adaptation protocol (service data adaptation protocol, SDAP) layer. A protocol entity below an RLC layer is referred to as an RLC bearer, and corresponding configuration is provided in an RLC bearer configuration.

### 4. RLC bearer (RLC bearer)

The RLC bearer is a protocol entity and configuration below an RLC layer, is a lower layer part of a radio bearer, and includes a series of resources such as an RLC protocol entity and a logical channel. One RLC bearer is associated with one logical channel. Generally, one RLC bearer is associated with one PDCP entity, that is, one RLC serves one radio bearer RB.

### 5. Discovery procedure (discovery procedure)

A UE that supports a proximity service searches for a nearby UE by using the discovery procedure, and sets up a unicast connection to the nearby UE to perform subsequent sidelink communication. A discovery protocol layer of the UE generates a discovery message, delivers the discovery message to a PDCP layer, and sends the discovery message to a peer UE via a lower layer.

The discovery procedure has two models: a model A (Model A) and a model B (Model B). In the model A, the UE may include an announcing UE (Announcing UE) and a monitoring UE (Monitoring UE). The announcing UE broadcasts a discovery message (discovery message), where the discovery message is also referred to as an announcement message (announcement message). The announcement message may carry specific information of the announcing UE, for example, a relay service code (relay service code, RSC) that indicates a service type that can be provided and is used by a surrounding UE to determine whether a service type that can be provided by the announcing UE is needed. After monitoring and receiving the announcement message, the neighboring monitoring UE determines, based on content carried in the announcement message, whether to use the announcing UE as a peer UE of sidelink communication. In the model B, the UE may include a discoverer UE and a discoveree UE. The discoverer UE broadcasts a discovery message, where the discovery message is also referred to as a solicitation message (solicitation message), and the solicitation message carries information about a service type that the discoverer UE is interested in. After monitoring and receiving the solicitation message, if the discoveree UE finds that the discoveree UE meets a service requirement of the discoverer UE, the discoveree UE replies the discoverer UE with another discovery message, where the discovery message is also referred to as a response message (response message).

Similar to that in sidelink communication, the discovery message carries a source L2 ID and a destination L2 ID that are used by the UE to send or receive the discovery message. The source L2 ID is allocated by a sending UE, and the destination L2 ID is a predefined or pre-configured default destination L2 ID.

### 6. Unicast connection setup

After a discovery procedure, a unicast connection is set up between UEs by using a unicast connection setup procedure. A UE that initiates the unicast connection setup procedure is referred to as an initiating UE (initiating UE), and a peer UE of the initiating UE is referred to as a target UE (target UE). After the discovery procedure, the initiating UE sends a unicast connection setup request (direct communication request, DCR) message to the target UE. The message carries an L2 ID of the initiating UE, an L2 ID of the target UE, and user information. The user information includes information related to an upper application layer. After receiving the unicast connection setup request message, the target UE determines, based on the user information in the unicast connection setup request message, whether the unicast connection setup request can be accepted. If the unicast connection setup request can be accepted, the initiating UE is replied with a direct communication accept (direct communication accept, DCA) message. If the unicast connection setup request cannot be accepted, the initiating UE is replied with a direct communication reject (direct communication reject, DCR) message.

In the foregoing model A, the monitoring UE may actively initiate a unicast connection setup process after finding a suitable peer UE. In the foregoing model B, the discoverer UE may initiate a unicast setup procedure after receiving a reply message from a suitable discoveree UE.

### 7. Sidelink UE-to-network relay (also referred to as sidelink UE-to-network relay, SLUE-to-network relay, or SL U2N relay)

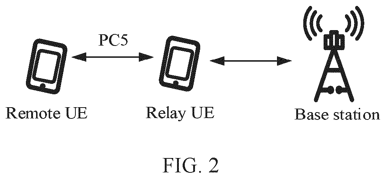

The SL U2N relay is a technology in which one UE helps another UE communicate with a base station, and is also referred to as a relay technology. FIG. 2 is a diagram of a communication architecture of SL U2N relay. A remote UE (Remote UE) communicates with a base station through cooperation of a relay UE (Relay UE). The remote UE communicates with the relay UE via a sidelink, and a corresponding interface is referred to as PC5. The relay UE and the base station are directly connected to each other, that is, communicate with each other through a Uu interface.

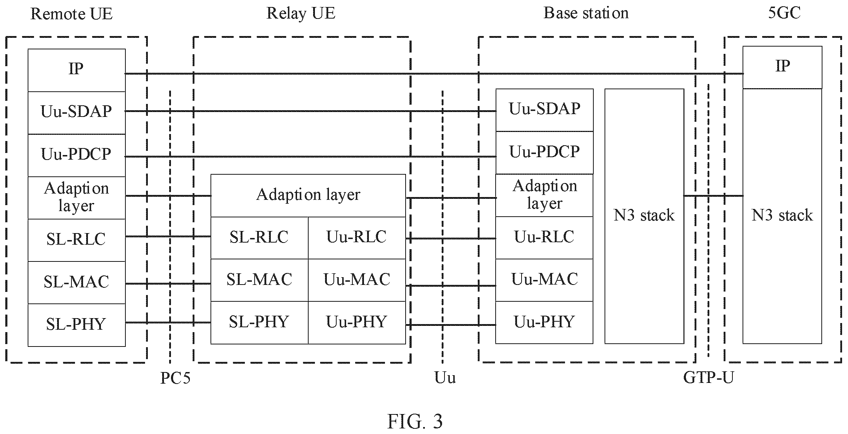

Embodiments of this application may be applied to a layer-2 (L2) scenario of SL U2N relay, referred to as L2 SL U2N relay for short below. FIG. 3 is a diagram of a protocol stack of L2SL U2N relay. A data packet of the remote UE is relayed and forwarded below a PDCP layer of the relay UE. To be specific, the relay UE maintains only an RLC bearer of the relay, including an RLC layer, a MAC layer, and a PHY layer. Therefore, there is an end-to-end PDCP layer, an end-to-end SDAP layer, and an end-to-end RRC layer between the remote UE and the base station, but there is no end-to-end RLC layer, end-to-end MAC layer, and end-to-end PHY layer between the remote UE and the base station.

In the protocol architecture, a sidelink relay adaptation protocol (sidelink relay adaptation protocol, SRAP) layer is added between the RLC layer and the PDCP layer. The SRAP layer is mainly used for multiplexing and demultiplexing of radio bearers. In other words, multiplexing of different radio bearers onto one RLC bearer and a corresponding demultiplexing process are supported. An RLC bearer between the remote UE and the relay UE is referred to as a PC5 relay RLC channel/bearer, and an RLC bearer between the relay UE and the base station is referred to as a Uu relay RLC channel/bearer. The base station performs SRAP configuration for the remote UE and the relay UE. The SRAP configuration may include a mapping relationship between an SRB ID/DRB ID of the remote UE and the Uu relay RLC channel/PC5 relay RLC channel, so that data of the remote UE can be correctly relayed and forwarded via the relay UE. Specifically, the base station configures a mapping relationship between a radio bearer (an SRB or a DRB) and the PC5 relay RLC channel for the remote UE, and configures a mapping relationship between the radio bearer of the remote UE and the Uu/PC5 relay RLC channel for the relay UE. In a data transmission process (uplink transmission is used as an example), after receiving a PDCP PDU from the PDCP layer, the SRAP layer of the remote UE adds ID information of the remote UE and ID information of the radio bearer (SRB or DRB) to an SRAP header. After receiving a data packet from the PC5 relay RLC channel, an adaptation layer of the relay UE may deliver the data packet to a correct Uu relay RLC channel based on the mapping relationship configured by the base station. After receiving the data packet from the Uu relay RLC channel, the base station side delivers, based on the ID information of the remote UE and the ID information of the radio bearer in the SRAP header, the data packet to a corresponding PDCP layer for processing. A data transmission process in a downlink direction is similar to that in an uplink direction, and details are not described herein again. The ID information of the remote UE may be a local ID of the remote UE. The local ID is a UE identifier allocated by the base station to the remote UE. The local ID is for sending uplink and downlink data of the remote UE. The identifier is added to the SRAR header, so that the relay UE and the base station can identify the remote UE to which the data packet belongs.

### 8. Multi-path relay (also referred to as multi-path relay)

A "path" in embodiments of this application is a communication path or a communication link.

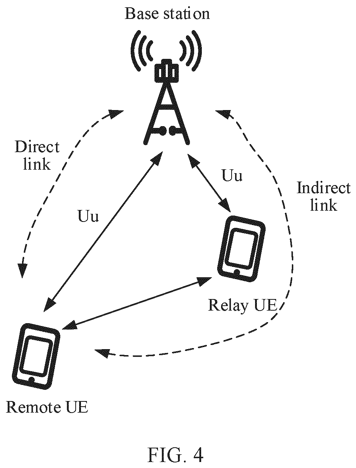

The 3rd generation partnership project (3rd generation partnership project, 3GPP) is studying a multi-path relay (multi-path relay) solution that is evolved from the SL U2N relay. FIG. 4 is a diagram of a communication architecture of multi-path relay. A remote UE communicates with a base station via both a direct (direct) link and an indirect (indirect) link. The remote UE and a relay UE are located in cell coverage of a same base station. On the direct link, the remote UE directly communicates with the base station through a Uu interface. On the indirect link, the remote UE communicates with the base station via the relay UE. The remote UE may be connected to and communicate with the relay UE via a sidelink, or the remote UE may communicate with the relay UE via a non-3GPP link. The remote UE simultaneously sends and receives same or different data on the two links, to improve a throughput and reliability of data sending and receiving.

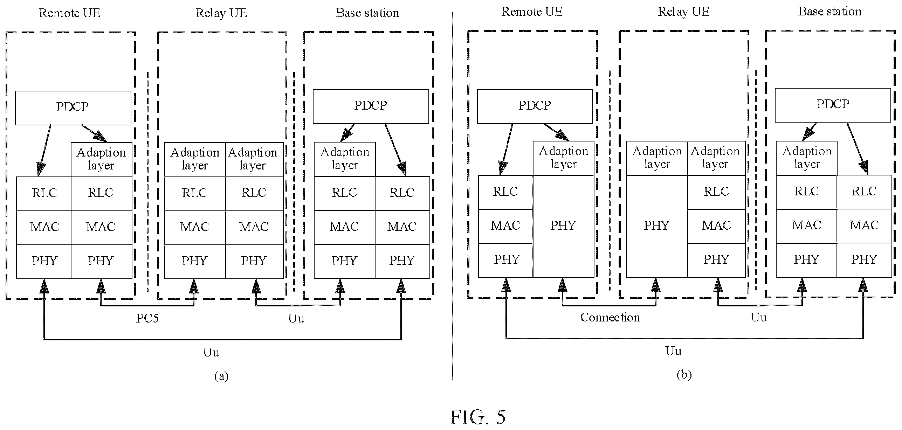

FIG. 5 is a diagram of an architecture of a protocol stack of multi-path relay. (a) in FIG. 5 is a diagram of an architecture of a protocol stack that is based on L2 SL U2N relay. A remote UE and a relay UE are previously connected via a sidelink. Therefore, based on the architecture of the protocol stack of the L2 SL U2N relay, a protocol stack for direct communication between the remote UE and a base station is added to the architecture. (b) in FIG. 5 is an architecture of a protocol stack used when the remote UE and the relay UE are connected by using non-3GPP. There is an adaptation layer between the remote UE and the relay UE and between the relay UE and the base station. However, there may be an SRAP layer, or there may be no SRAP layer. Specific selection is performed based on a bearer multiplexing requirement of the remote UE.

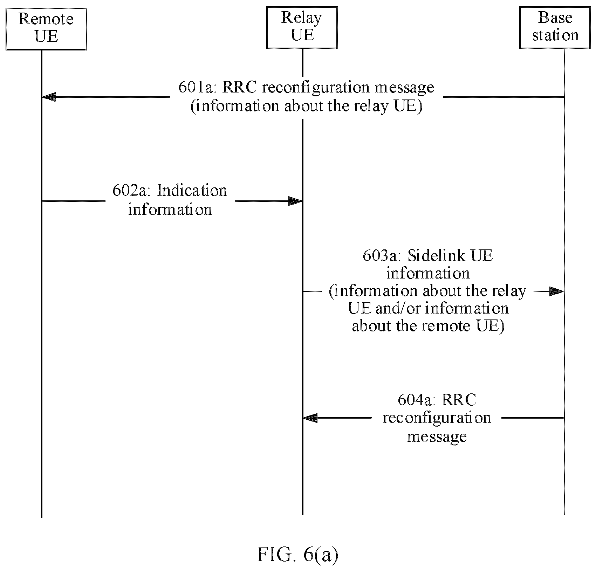

FIG. 6(a) is a schematic flowchart of a communication method according to an embodiment of this application. The method is used to configure a plurality of paths between a remote UE and a base station for the remote UE. Before the plurality of paths are configured, there is a direct path between the remote UE and the base station, in other words, the remote UE can communicate with the base station through a Uu air interface between the remote UE and the base station. Then, in view of this, a relay UE is configured for the remote UE, and the remote UE can communicate with the base station via the relay UE.

The method includes the following steps.

Step 601a: The base station sends an RRC reconfiguration message to the remote UE through an interface between the remote UE and the base station. Correspondingly, the remote UE receives the RRC reconfiguration message through the interface.

It should be noted that in this embodiment of this application, the RRC reconfiguration message may also be referred to as an RRC configuration message, an RRC message, a reconfiguration message, or a configuration message. A name of the message is not limited in this embodiment of this application and is centrally described herein.

The RRC reconfiguration message includes information about the relay UE. For example, the information about the relay UE may be a source L2 ID of the relay UE, a source address of the relay UE, or the like.

Optionally, the RRC reconfiguration message may further include at least one of SRAP configuration information, end-to-end bearer configuration information between the remote UE and the base station, or PC5 relay RLC channel/bearer configuration information between the remote UE and the relay UE. The SRAP configuration information includes a mapping relationship between an SRB ID/DRB ID of the remote UE and a PC5 relay RLC channel/bearer.

Step 602a: The remote UE sends indication information to the relay UE based on the information about the relay UE, where the indication information triggers the relay UE to enter an RRC connected state.

In an implementation, the remote UE does not sense an RRC status of the relay UE. When the remote UE receives the RRC reconfiguration message, the remote UE sends the indication information to the relay UE. After the relay UE receives the indication information, if the relay UE is already in the RRC connected state, the relay UE ignores the indication information; or if the relay UE is in an RRC idle state (RRC_IDLE) or an RRC inactive state (RRC INACTIVE), the relay UE enters the RRC connected state from the RRC idle state or the RRC inactive state. Sensing in this embodiment of this application may be understood as determining, determining, or checking. The descriptions are centrally provided herein, and details are not described subsequently.

In another implementation, the remote UE senses an RRC status of the relay UE. For example, the RRC reconfiguration message in the foregoing step 601a includes status information, and the status information indicates the RRC status of the relay UE. If the remote UE determines that the RRC status of the relay UE is the RRC connected state, the relay UE does not send the indication information to the relay UE. If the RRC status of the relay UE is the RRC idle state or the RRC inactive state, the remote UE determines that the relay UE needs to be triggered to enter the RRC connected state, and the remote UE sends the indication information to the relay UE. Therefore, if the relay UE receives the indication information, the relay UE enters the RRC connected state from the RRC idle state or the RRC inactive state based on the indication information.

In another implementation, the remote UE senses the RRC status of the relay UE, but regardless of the RRC status of the relay UE, after receiving the RRC reconfiguration message, the remote UE sends the indication information to the relay UE. In other words, the RRC reconfiguration message triggers the remote UE to send the indication information to the relay UE, and a specific RRC status of the relay UE does not affect sending of the indication information by the remote UE.

Step 603a: The relay UE in the RRC connected state sends sidelink UE information (sidelink UE information, SUI) to the base station. Correspondingly, the base station receives the SUI.

The SUI includes information about the remote UE and/or the information about the relay UE.

The information about the relay UE may be the source L2 ID, the source address, or the like of the relay UE.

The information about the remote UE may be a destination L2 ID, a target address, or the like of the remote UE.

It should be noted that if the indication information triggers the relay UE to enter the RRC connected state from the RRC idle state or the RRC inactive state, step 603a is performed. If the relay UE is already in the RRC connected state before receiving the indication information, the relay UE may have reported the information about the relay UE to the base station first. Therefore, step 603a may be performed, or may be skipped (that is, step 603a is not performed).

Step 604a: After receiving the SUI from the relay UE, the base station sends the RRC reconfiguration message to the relay UE. Correspondingly, the relay UE receives the RRC reconfiguration message.

The RRC reconfiguration message includes at least one of the SRAP configuration information, Uu relay RLC channel/bearer configuration information between the relay UE and the base station, or the PC5 relay RLC channel/bearer configuration information between the remote UE and the relay UE. The SRAP configuration information includes the mapping relationship between the SRB ID/DRB ID of the remote UE and the PC5 relay RLC channel/bearer, and a mapping relationship between an SRB ID/DRB ID of the remote UE and a Uu relay RLC channel/bearer.

According to the foregoing solution, the relay UE can be configured for the remote UE, and when the relay UE is in the RRC idle state or the RRC inactive state, the relay UE is activated, so that the relay UE enters the RRC connected state, thereby ensuring that a plurality of paths between the remote UE and the base station are successfully configured for the remote UE. This can improve reliability of communication between the remote UE and the base station, and improve quality of service and user experience.

In an implementation, in a scenario in which a plurality of paths are configured for the remote UE, for example, in a procedure in which a plurality of paths are configured for the remote UE or after the multi-path configuration is completed, the base station may send notification information to the relay UE, where the notification information is used by the relay UE to determine whether control plane signaling needs to be forwarded for the remote UE. The relay UE determines, based on the notification information, that the control plane signaling of the base station needs to be forwarded for the remote UE, or that the control plane signaling sent by the base station does not need to be forwarded for the remote UE. The control plane signaling may be a system message, a paging message, or the like. It may be understood that a plurality of paths may be configured for the remote UE in the manner shown in FIG. 6(a), or in another manner. This is not limited in this embodiment of this application. In other words, a procedure in which the base station sends the notification information to the relay UE may be independent of the procedure shown in FIG. 6(a), or may be coupled with the procedure shown in FIG. 6(a).

If the solution in which the base station sends the notification information to the relay UE is implemented in combination with the embodiment in FIG. 6(a), the notification information may be carried in the RRC reconfiguration message in step 604a, or the notification information is sent by using another independent message (for example, RRC signaling or MAC CE signaling).

In a specific implementation, the notification information may indicate that a relay service type provided by the relay UE is a 3GPP R17 relay service or a 3GPP R18 relay service. When the notification information indicates that the relay service type provided by the relay UE is the 3GPP R17 relay service, the relay UE is configured to provide SL U2N relay for the remote UE. When the notification information indicates that the relay service type provided by the relay UE is the 3GPP R18 relay service, the relay UE is configured to provide multi-path relay for the remote UE, that is, provide a multi-path relay service.

In still another specific implementation, the notification information indicates that the relay UE needs to forward the control plane signaling of the base station for the remote UE or does not need to forward the control plane signaling of the base station for the remote UE.

For example, if the notification information indicates that the relay service type is the 3GPP R17 relay service, or indicates that the relay UE needs to forward the control plane signaling for the remote UE, the relay UE may determine, based on the notification information, that the remote UE can communicate with the base station only via an indirect link, or the remote UE and the base station cannot directly receive or send the control plane signaling. Therefore, the remote UE cannot directly receive the control plane signaling from the base station, and the relay UE forwards the control plane signaling for the remote UE. For example, the relay UE forwards a system message to the remote UE. Alternatively, the relay UE calculates a paging slot of the remote UE and monitors a paging message of the remote UE in the paging slot of the remote UE. If the relay UE monitors the paging message that needs to be sent by the base station to the remote UE, the relay UE sends the paging message to the remote UE based on identification information of the remote UE in the paging message. The method can improve communication reliability of the remote UE.

For another example, if the notification information indicates that the relay service type provided by the relay UE is the 3GPP R18 relay service, or indicates that the control plane signaling does not need to be forwarded for the remote UE, the relay UE determines, based on the notification information, that the remote UE can communicate with the base station via the indirect link or via a direct link. Therefore, the remote UE may directly receive the control plane signaling from the base station. Therefore, the relay UE may not need to forward, for the remote UE, the control plane signaling sent by the base station to the remote UE, but the remote UE directly receives the control plane signaling from the base station. The method can reduce signaling overheads of the relay UE.

Optionally, the base station may send the notification information to the relay UE when the relay UE does not need to provide relay forwarding of the control plane signaling. Therefore, if the relay UE does not receive the notification information sent by the base station, it is considered by default that the relay UE needs to provide a relay forwarding service of a control plane for the remote UE.

Optionally, the base station may send the notification information to the relay UE when the relay UE needs to provide relay forwarding of the control plane signaling. Therefore, if the relay UE does not receive the notification information sent by the base station, it is considered by default that the relay UE does not need to provide a relay forwarding service of a control plane for the remote UE.

With reference to the embodiment in FIG. 6(a), a plurality of different implementations of the indication information and a corresponding procedure in a corresponding implementation are described below.

Method 1: The indication information is an RRC reconfiguration complete message, in other words, the indication information is carried in an RRC reconfiguration complete message.

It should be noted that, in this embodiment of this application, the RRC reconfiguration complete message is for responding to the RRC reconfiguration message and indicates that RRC reconfiguration is completed. The RRC reconfiguration complete message may also be referred to as an RRC configuration complete message, an RRC complete message, a reconfiguration complete message, a configuration complete message, a complete message, a response message, or the like. A name of the message is not limited in this embodiment of this application and is centrally described herein.

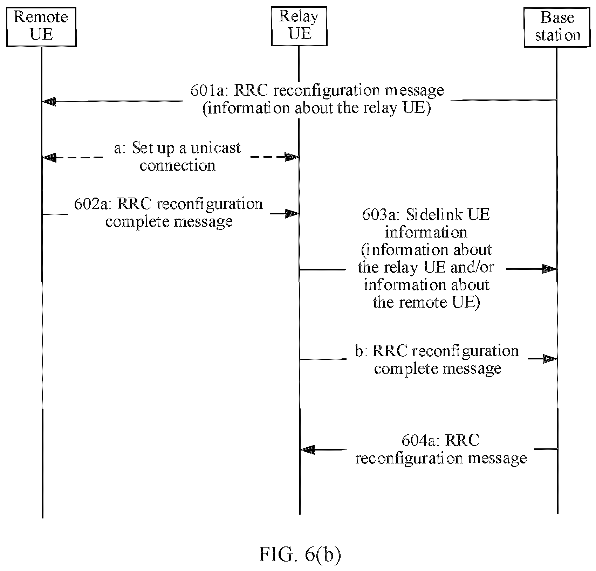

FIG. 6(b) is a schematic flowchart of a communication method according to an embodiment of this application. The method is obtained through extension based on the embodiment in FIG. 6(a), and the embodiment in FIG. 6(b) is a specific implementation of the embodiment in FIG. 6(a). The indication information in FIG. 6(a) is specifically an RRC reconfiguration complete message in FIG. 6(b).

The remote UE may determine, based on the RRC status of the relay UE, a manner of sending the RRC reconfiguration complete message. The manner of sending the RRC reconfiguration complete message may be as follows: The remote UE sends the RRC reconfiguration complete message to the base station through the interface between the remote UE and the base station, or the remote UE sends the RRC reconfiguration complete message to the base station via the relay UE, to be specific, the remote UE sends the RRC reconfiguration complete message to the relay UE, and then the relay UE forwards the RRC reconfiguration complete message to the base station.

For example, if the remote UE senses that the RRC status of the relay UE is the RRC idle state or the RRC inactive state, the remote UE determines that the relay UE needs to be triggered to enter the RRC connected state, and the relay UE needs to be triggered, through the RRC reconfiguration complete message, to enter the RRC connected state. In other words, the remote UE sends the RRC reconfiguration complete message to the relay UE, and the relay UE forwards the RRC reconfiguration complete message to the base station. The RRC reconfiguration complete message can trigger the relay UE to enter the RRC connected state. If the remote UE senses that the RRC status of the relay UE is the RRC connected state, the remote UE may reply with the RRC reconfiguration complete message via a direct link between the remote UE and the base station, or the remote UE may send the RRC reconfiguration complete message to the relay UE, and then the relay UE sends the RRC reconfiguration complete message to the base station.

For another example, the remote UE does not sense the RRC status of the relay UE, and directly sends the RRC reconfiguration complete message to the relay UE. After the relay UE receives the RRC reconfiguration complete message, if the relay UE is currently in the RRC idle state or the RRC inactive state, the relay UE needs to enter the RRC connected state. Then, the relay UE forwards the RRC reconfiguration complete message to the base station (that is, step b). A sequence of step b and step 603a is not limited.

Optionally, before step 602a, if no unicast connection is set up between the remote UE and the relay UE, the remote UE first sets up a unicast connection to the relay UE (that is, step a). For example, the remote UE sends a unicast connection setup request message to the relay UE, to request to set up a unicast connection.

Method 2: The indication information is carried in a request message, where the request message is for requesting to set up a unicast connection, and the indication information indicates that the unicast connection is set up to obtain a relay service of the relay UE. The request message may be a unicast connection setup request message or a unicast connection setup reply message.

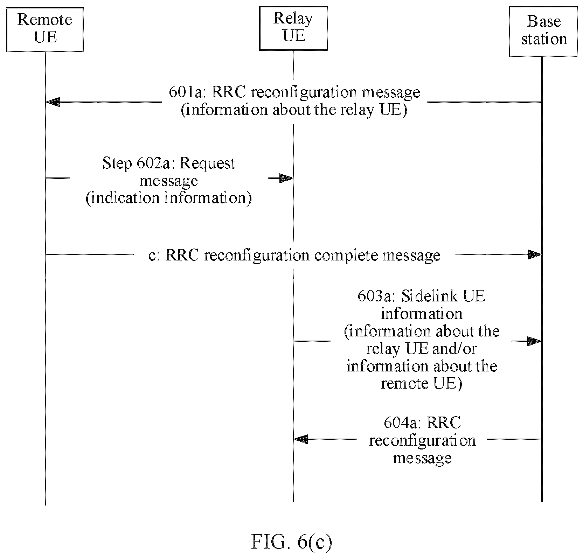

FIG. 6(c) is a schematic flowchart of a communication method according to an embodiment of this application. The method is obtained through extension based on the embodiment in FIG. 6(a), and the embodiment in FIG. 6(c) is a specific implementation of the embodiment in FIG. 6(a). The indication information in FIG. 6(a) is sent to the relay UE by using a unicast connection setup procedure in FIG. 6(c). To be specific, the indication information is carried in a request message for requesting to set up a unicast connection, and the indication information indicates that the unicast connection is set up to obtain the relay service of the relay UE.

Specifically, no unicast connection is set up between the remote UE and the relay UE. Therefore, after step 601a, the remote UE sends the foregoing request message to the relay UE, where the request message carries the indication information (that is, step 602a).

In an implementation, if the remote UE senses that the RRC status of the relay UE is the RRC idle state or the RRC inactive state, the remote UE determines that the relay UE needs to be triggered to enter the RRC connected state, and then includes the indication information in the foregoing request message, to trigger the relay UE to enter the RRC connected state. After receiving the request message, the relay UE sets up a unicast connection to the remote UE. In addition, the relay UE enters the RRC connected state based on the indication information.

In another implementation, the relay UE does not sense the RRC status of the relay UE, and directly includes the indication information in the request message. After receiving the request message, the relay UE sets up a unicast connection to the remote UE. In addition, if the relay UE is currently in the RRC idle state or the RRC inactive state, the relay UE further needs to enter the RRC connected state.

It should be noted that the indication information in the request message may be explicit indication information, for example, binary indication information or enumerated indication information. The indication information explicitly indicates that the unicast connection is set up to obtain the relay service of the relay UE. Alternatively, the indication information may be implicit indication information. For example, the indication information is a relay service code or user information of the relay UE, and the relay service code or the user information of the relay UE implicitly indicates that the unicast connection is set up to obtain the relay service of the relay UE.

In the foregoing implementation, the relay UE is triggered, through the indication information carried in the request message, to enter the RRC connected state.

In still another implementation, the relay UE may alternatively be triggered, through indication information corresponding to the request message, to enter the RRC connected state, that is, the indication information is not carried in the request message. For example, the indication information is a special L2 ID corresponding to the request message, a service type corresponding to the special L2 ID is the relay service type, and the special L2 ID is a special L2 ID of the relay UE or a special L2 ID used by the remote UE to set up multi-path relay. If the special L2 ID is a special L2 ID of the relay UE, the special L2 ID is a destination L2 ID corresponding to the request message sent by the remote UE. In addition, the special L2 ID may be a source L2 ID corresponding to the discovery message sent by the relay UE. If the special L2 ID is a special L2 ID of the remote UE, the special L2 ID is a source L2 ID corresponding to the request message sent by the remote UE. If the relay UE determines that the L2 ID corresponding to the request message is a special L2 ID, the relay UE determines, based on the special L2 ID, that the relay service needs to be provided for the remote UE, and learns that the relay UE needs to enter the RRC connected state. If the relay UE determines that the L2 ID corresponding to the request message is a common L2 ID other than the special L2 ID, and a service type corresponding to the common L2 ID is a device-to-device (device-to-device, D2D) service type, the relay UE determines, based on the common L2 ID, that a D2D communication service needs to be provided for the remote UE.

In the embodiment in FIG. 6(c), the remote UE may further send an RRC reconfiguration complete message to the base station through the interface between the remote UE and the base station (that is, step c), to notify the base station that reconfiguration of the remote UE is completed. A sequence between step 602a and step c in FIG. 6(c) is not limited.

Alternatively, in the embodiment in FIG. 6(c), the remote UE may forward the RRC reconfiguration complete message via the relay UE.

For the method 2, in specific implementation, the indication information in the request message may indicate that a unicast connection is set up to obtain the relay service of the relay UE, so as to trigger the relay UE to enter the RRC connected state.

Alternatively, the request message may not carry the foregoing indication information, but the request message indicates that the unicast connection is set up to obtain the relay service of the relay UE. In this case, the request message may be understood as indication information. Therefore, the request message is for requesting to set up a unicast connection, and also triggers the relay UE to enter the RRC connected state.

Method 3: The indication information is PC5-S signaling, a PC5 RRC message, or sidelink media access control control element (sidelink media access control control element, SL MAC CE) signaling.

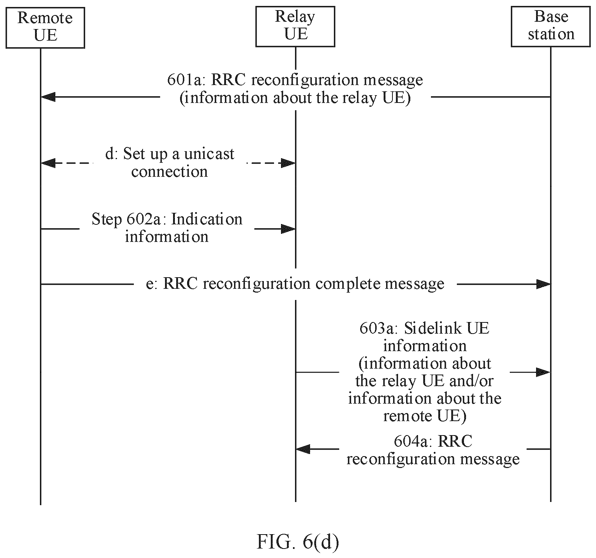

FIG. 6(d) is a schematic flowchart of a communication method according to an embodiment of this application. The method is obtained through extension based on the embodiment in FIG. 6(a), and the embodiment in FIG. 6(d) is a specific implementation of the embodiment in FIG. 6(a). Indication information in FIG. 6(d) is not carried in a unicast connection setup request message or a unicast connection setup reply message, and the indication information is not an RRC reconfiguration complete message, but a unicast message or signaling.

In the embodiment in FIG. 6(d), the remote UE may further need to send an RRC reconfiguration complete message to the base station through the interface between the remote UE and the base station (that is, step e), to notify the base station that reconfiguration of the remote UE is completed. A sequence between step 602a and step e in FIG. 6(d) is not limited. Alternatively, in the embodiment in FIG. 6(d), the remote UE may forward the RRC reconfiguration complete message via the relay UE.

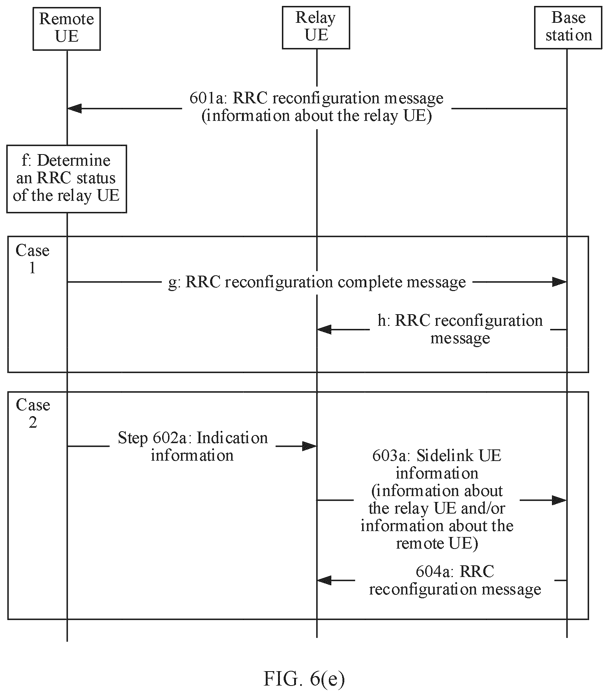

Optionally, in the embodiment in FIG. 6(e), before step 602a, if no unicast connection is set up between the remote UE and the relay UE, the remote UE first sets up a unicast connection to the relay UE (that is, step d). Specifically, the remote UE sends a unicast connection setup request message or a unicast connection setup reply message to the relay UE, to request to set up a unicast connection.

A plurality of different implementations for triggering, by the remote UE, the relay UE to enter the RRC connected state are provided above. Certainly, in actual application, implementations are not limited to the foregoing methods, and another method may alternatively be used.

FIG. 6(e) is a schematic flowchart of a communication method according to an embodiment of this application. In the method, after step 601a, the remote UE determines the RRC status of the relay UE (that is, step f). For example, the remote UE includes, in the RRC reconfiguration message in step 601a, indication information indicating the RRC status of the relay UE, or the remote UE receives a discovery message of the relay UE, where the discovery message carries the RRC status of the relay UE. In Case 1, the RRC status of the relay UE is the RRC connected state. Therefore, the base station can learn of the information about the relay UE, and the relay UE does not need to report the sidelink UE information to the base station. Therefore, only step g and step h need to be performed. To be specific, the remote UE sends an RRC reconfiguration complete message to the base station through the interface between the remote UE and the base station, and the base station sends an RRC reconfiguration message to the relay UE. For content carried in the RRC reconfiguration message, refer to descriptions in step 604a. Optionally, in Case 1, if no unicast connection is set up between the relay UE and the remote UE, the remote UE further needs to set up a unicast connection to the relay UE. In Case 2, if the RRC status of the relay UE is the RRC idle state or the RRC inactive state, step 602a, step 603a, and step 604a need to be performed. For details, refer to the embodiment in FIG. 6(a). In other words, Case 2 is specific implementation of the embodiment in FIG. 6(a). For a plurality of different implementations of indication information in Case 2, refer to the foregoing embodiments in FIG. 6(b), FIG. 6(c), and FIG. 6(d). Details are not described again.

It should be noted that, for step 601a, step 602a, step 603a, and step 604a in FIG. 6(b), FIG. 6(c), FIG. 6(d), and FIG. 6(e), reference may be made to corresponding descriptions in the embodiment in FIG. 6(a).

In an implementation, if a link failure or a connection failure occurs between the remote UE and the relay UE, or a link failure or a connection failure occurs between the remote UE and the base station, or a link failure or a connection failure occurs between the base station and the relay UE in a process of configuring a plurality of paths for the remote UE, the remote UE needs to report the link failure or the connection failure to the base station. Different types of occurring link failures or connection failures and corresponding reporting modes are described below.

In an implementation, when determining that a link failure or a connection failure occurs between the remote UE and the relay UE, the remote UE sends first failure indication information to the base station, where the first failure indication information indicates that a link failure or a connection failure occurs between the remote UE and the relay UE. The link failure may be a PC5 RLF, and the connection failure may be a Bluetooth connection failure, a Wi-Fi connection failure, or the like. RLF means radio link failure (radio link failure).

In another implementation, when determining that a link failure or a connection failure occurs between the remote UE and the base station, the remote UE sends second failure indication information to the base station via the relay UE, where the second failure indication information indicates that a link failure or a connection failure occurs between the remote UE and the base station. The link failure may be a Uu RLF, and the connection failure may be a non-3GPP connection failure or the like.

In another implementation, when determining that a link failure or a connection failure occurs between the relay UE and the base station, the relay UE sends third failure indication information to the remote UE, where the third failure indication information indicates that a link failure or a connection failure occurs between the relay UE and the base station. Then the remote UE sends fourth failure indication information to the base station, where the fourth failure indication information indicates that a link failure or a connection failure occurs between the relay UE and the base station. The link failure may be a Uu RLF, and the connection failure may be a non-3GPP connection failure or the like.

If a link failure or a connection failure occurs between the remote UE and the relay UE, or a link failure or a connection failure occurs between the relay UE and the base station, the remote UE or the base station may reselect a relay UE, and then reconfigure a plurality of paths for the remote UE by using the newly selected relay UE. If a link failure or a connection failure occurs between the remote UE and the base station, the remote UE may perform an RRC re-setup procedure, and complete multi-path configuration of the remote UE in the procedure.

It should be noted that the foregoing reporting solution that is after a link failure or a connection failure and that is described above may be implemented in combination with the embodiment in FIG. 6(a), FIG. 6(b), FIG. 6(c), FIG. 6(d), or FIG. 6(e), or may be implemented separately. This is not limited in this application.

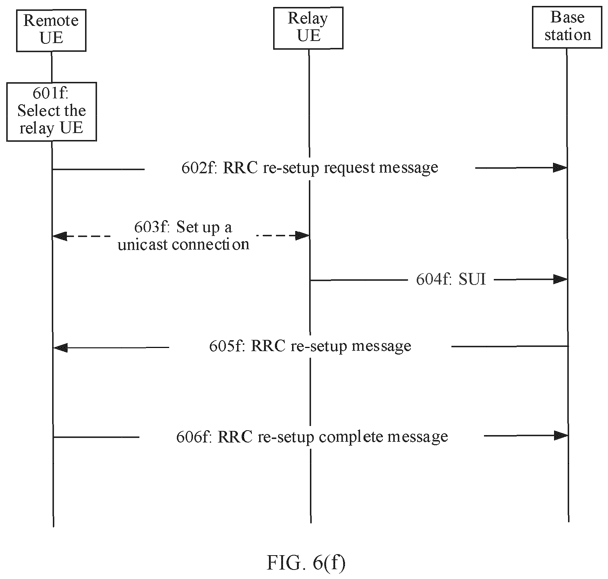

FIG. 6(f) is a schematic flowchart of another communication method according to an embodiment of this application. In the method, multi-path configuration of a remote UE is completed in an RRC re-setup procedure of the remote UE. The method includes the following steps.

Step 601f: The remote UE selects a relay UE.

In an implementation, the remote UE selects, from a cell in which the remote UE is located, a UE as the relay UE. The relay UE may be a UE with largest reference signal received power in the cell or any UE in the cell. The remote UE may obtain reference signal received power of UEs in the cell in the discovery procedure described above.

Step 602f: The remote UE sends an RRC re-setup request message to a base station. Correspondingly, the base station receives the RRC re-setup request message.

Step 603f: The remote UE sets up a unicast connection to the relay UE.

Step 603f is an optional step. When the remote UE has set up a unicast connection to the relay UE, step 603f does not need to be performed. When no unicast connection is set up between the remote UE and the relay UE, step 603f needs to be performed.

A sequence of step 602f and step 603f is not limited.

Step 604f: The relay UE sends SUI to the base station. Correspondingly, the base station receives the SUI.

The SUI includes information about the remote UE, or includes information about the relay UE and information about the remote UE.

Step 605f: The base station sends an RRC re-setup message to the remote UE. Correspondingly, the remote UE receives the RRC re-setup message.

Step 606f: The remote UE sends an RRC re-setup complete message to the base station. Correspondingly, the base station receives the RRC re-setup complete message.

The RRC re-setup complete message includes the information about the relay UE, or includes the information about the relay UE and the information about the remote UE.

The information about the relay UE may include a destination L2 ID of the relay UE, and the information about the remote UE may include a source L2 ID of the remote UE.

The base station learns, based on content in the RRC re-setup complete message and content in the SUI in step 604f, that the remote UE selects the relay UE to set up a multi-path connection for the remote UE. To be specific, the base station learns, based on content in the SUI reported by the relay UE and content in the RRC re-setup complete message reported by the remote UE, that both the relay UE and the remote UE support setup of a multi-path connection by the relay UE for the remote UE. For example, the SUI in step 604f includes the information about the relay UE and the information about the remote UE, and the RRC re-setup complete message in step 606f includes the information about the relay UE and the information about the remote UE. For another example, the SUI in step 604f includes the information about the relay UE and the information about the remote UE, and the RRC re-setup complete message in step 606f includes the information about the relay UE. For another example, the SUI in step 604f includes the information about the remote UE, and the RRC re-setup complete message in step 606f includes the information about the relay UE and the information about the remote UE. For another example, the SUI in step 604f includes information about the remote UE, and the RRC re-setup complete message in step 606f includes the information about the relay UE.

Subsequently, the base station further needs to separately send an RRC reconfiguration message to the remote UE and the relay UE, to complete RRC configuration for the relay UE and the remote UE. For content of the RRC reconfiguration message, refer to descriptions in the embodiment in FIG. 6(a).

In the foregoing solution, after the re-setup procedure of the remote UE is completed, the base station may configure a plurality of paths for the remote UE based on the information about the relay UE selected by the remote UE, to help implement quick multi-path configuration of the remote UE.

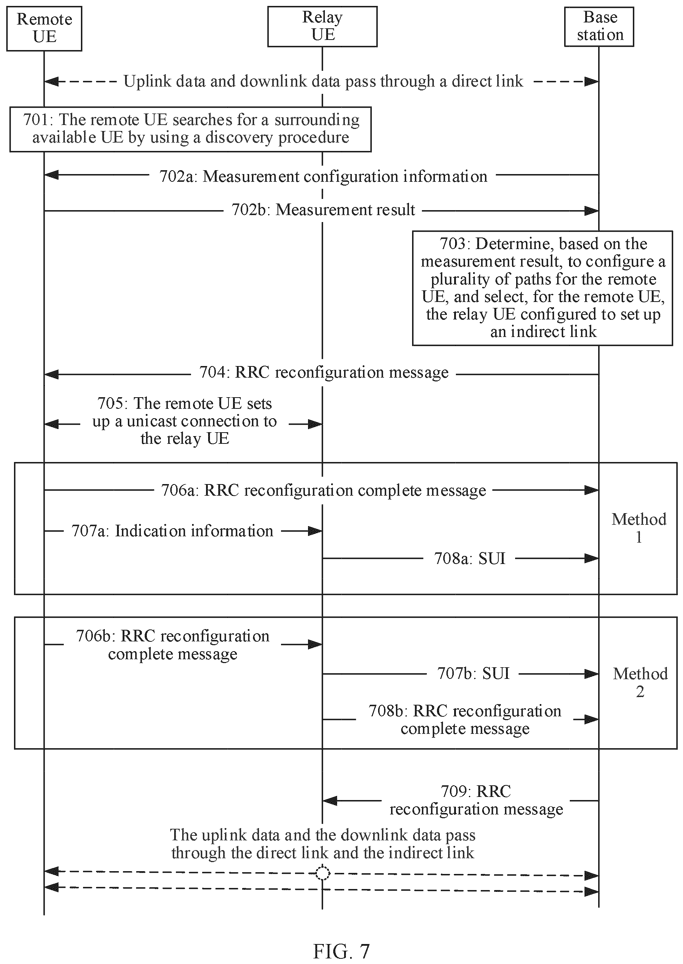

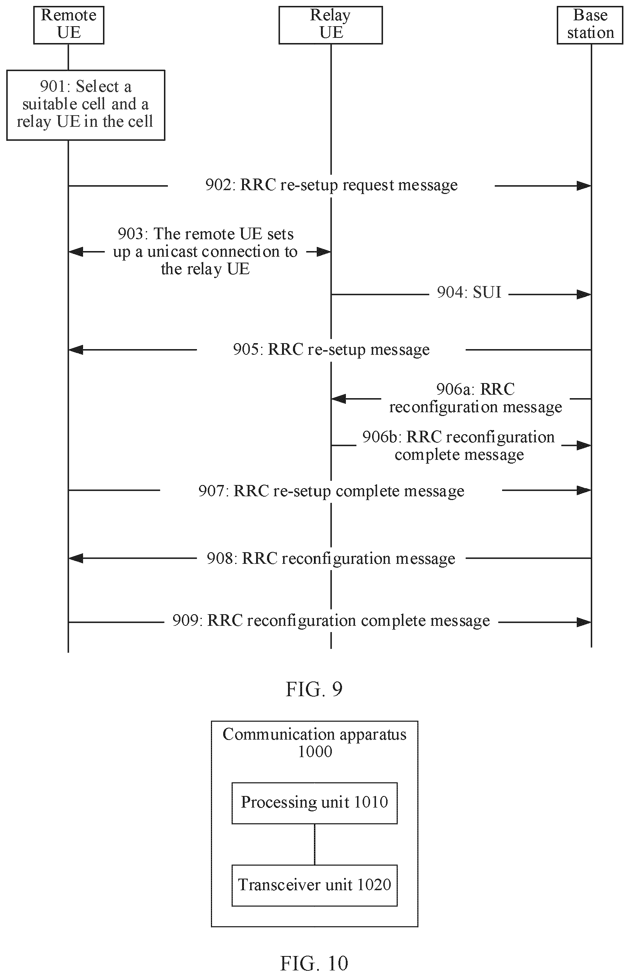

The foregoing embodiments are described below with reference to specific examples. An embodiment in FIG. 7 is a specific example of the embodiment in FIG. 6(a) or FIG. 6(e), and an embodiment in FIG. 9 is a specific example of the embodiment in FIG. 6(f).

FIG. 7 is a schematic flowchart of a communication method according to an embodiment of this application. The method includes the following steps.

Step 701: A remote UE searches for a surrounding available UE by using a discovery procedure.

The remote UE may search for the surrounding available UE by using the method of the foregoing model A or the foregoing model B. The available UE is a UE that can provide a relay service for the remote UE.

Step 702a: A base station sends measurement configuration information to the remote UE.

Step 702b: The remote UE performs measurement based on the measurement configuration information to obtain a measurement result, and sends the measurement result to the base station.

The measurement result includes a source L2 ID of one or more UEs, RSRP of the one or more UEs, and an identifier of a serving cell of the one or more UEs.

It should be noted that step 701 may alternatively be performed after step 702a. Therefore, the remote UE may simultaneously discover and measure a UE surrounding the remote UE. For example, the remote UE receives a discovery message from a surrounding UE, and measures the discovery message to obtain signal quality of the UE.

Step 703: The base station determines, based on the measurement result, to configure a plurality of paths for the remote UE, and selects, for the remote UE, a relay UE configured to set up an indirect link.

For an implementation for selecting the relay UE by the base station, refer to descriptions in the embodiment in FIG. 6(a).

Step 704: The base station sends an RRC reconfiguration message to the remote UE.

For content of the RRC reconfiguration message, refer to descriptions of step 601a.

Step 705: The remote UE sets up a unicast connection to the relay UE.

After step 705, the following step 706a to step 708a and step 709 are performed, or the following step 706b to step 708b and step 709 are performed. In other words, either step 706a to step 708a or step 706b to step 708b are performed. The following step 706a to step 708a are referred to as Method 1, and the following step 706b to step 708b are referred to as Method 2.

In an implementation, in a manner of predefining or pre-configuring for the remote UE, the remote UE and the relay UE are enabled to perform Method 1 or perform Method 2. In another implementation, the remote UE may alternatively decide to perform Method 1 or Method 2.

In addition, it should be noted that for Method 1, if the remote UE can learn that an RRC status of the relay UE is an RRC connected state, the remote UE may send an RRC reconfiguration complete message to the base station through an interface between the remote UE and the base station, and does not need to trigger the relay UE to enter the RRC connected state. That is, only step 706a needs to be performed, but step 707a and step 708a do not need to be performed.

Step 706a: The remote UE sends an RRC reconfiguration complete message to the base station via a Uu link.

The RRC reconfiguration complete message indicates that the remote UE successfully receives multi-path configuration information. The multi-path configuration information is information included in the RRC reconfiguration message.

Step 707a: The remote UE sends indication information to the relay UE, where the indication information triggers the relay UE to enter an RRC connected state.

For an implementation for triggering, by using the indication information, the relay UE to enter the RRC connected state, refer to descriptions in the foregoing embodiments in FIG. 6(a) to FIG. 6(e).

Step 708a: The relay UE is triggered to enter the RRC connected state, and sends sidelink UE information (Sidelink UE information, SUI) to the base station.

The SUI includes one or more of a source L2 ID of the relay UE, a destination L2 ID of the remote UE, or the indication information, where the indication information is for requesting the base station to allocate a local identifier (Local ID) to the remote UE.

Step 706b: The remote UE sends an RRC reconfiguration complete message to the relay UE.

For an implementation of the RRC reconfiguration complete message, refer to descriptions in the foregoing embodiments in FIG. 6(a) to FIG. 6(e).

Step 707b: The relay UE is triggered to enter an RRC connected state, and sends SUI to the base station.

The SUI includes a source L2 ID of the relay UE, a destination L2 ID of the remote UE, and indication information, where the indication information is for requesting the base station to allocate a local identifier (Local ID) to the remote UE.

Step 708b: The relay UE forwards the RRC reconfiguration complete message from the remote UE to the base station.

In the foregoing method, when configuring a plurality of paths for the remote UE, the base station may define Method 1 (including step 706a to step 708a) to trigger the relay UE to enter the RRC connected state. In this case, an SRB bearer is configured on a Uu link between the remote UE and the base station. In another possible implementation, a case in which the base station configures the SRB is not limited. Therefore, there may be the following three cases:
Case 1: The base station configures the SRB only on a direct link. In this case, by using Method 1 (including step 706a to step 708a), the remote UE replies with the RRC reconfiguration complete message and triggers the relay UE to enter the RRC connected state.
Case 2: The base station configures SRB split (split)/duplication (duplication), that is, a same SRB message may be communicated on both a direct link and an indirect link. In this case, the remote UE may reply with the RRC reconfiguration complete message by using Method 1 (including step 706a to step 708a) and/or Method 2 (including step 706b to step 708b). Selection of a specific method may be left to the UE for implementation.
   If the remote UE replies with the RRC reconfiguration complete message on both the direct link and the indirect link, the relay UE may not need to be triggered, by using the foregoing step 707a, to enter the RRC connected state, but the relay UE is triggered, by using the RRC reconfiguration complete message, to enter the RRC connected state.
Case 3: The base station configures the SRB only on an indirect link. In this case, by using Method 2 (including step 706b to step 708b), the remote UE replies with the RRC reconfiguration complete message and triggers the relay UE to enter the RRC connected state.

Descriptions of the three cases are also applicable to the foregoing embodiments in FIG. 6(a) to FIG. 6(e), and details are not described again.

Step 709: The base station sends the RRC reconfiguration message to the relay UE.

For an implementation of the RRC reconfiguration message, refer to descriptions of step 604a in FIG. 6(a).

In the foregoing solution, when the relay UE selected by the base station for the remote UE is in an RRC idle state or an RRC inactive state, the remote UE may reply the base station with the RRC reconfiguration complete message via the Uu link between the remote UE and the base station, and the remote UE further triggers the relay UE to enter the RRC connected state, to ensure that a plurality of paths are successfully configured for the remote UE, so as to help improve communication quality of the remote UE.

In an implementation, in a procedure in which the base station configures a plurality of paths for the remote UE or after the multi-path configuration is completed, the base station may send notification information to the relay UE, where the notification information is for determining whether the relay UE needs to forward control plane signaling for the remote UE. The relay UE may determine, based on the notification information, whether the control plane signaling needs to be forwarded for the remote UE. For detailed descriptions of the notification information, refer to related descriptions in the embodiment in FIG. 6(a). Details are not described again.

In an implementation, if a solution in which the base station sends the notification information to the relay UE is combined with the embodiment in FIG. 7, the RRC reconfiguration message in step 709 may include the notification information, or the notification information is sent by using another message between the base station and the relay UE.

In the foregoing process of configuring a plurality of paths for the remote UE, a link failure or a connection failure may occur. When a link failure or a connection failure occurs, corresponding processing needs to be performed to ensure that a plurality of paths are successfully configured for the remote UE. Descriptions of different cases are provided below.

Example 1: In a process in which the remote UE sets up a unicast connection to the relay UE or after a unicast connection is set up, the remote UE detects that a PC5 RLF occurs between the remote UE and the relay UE.

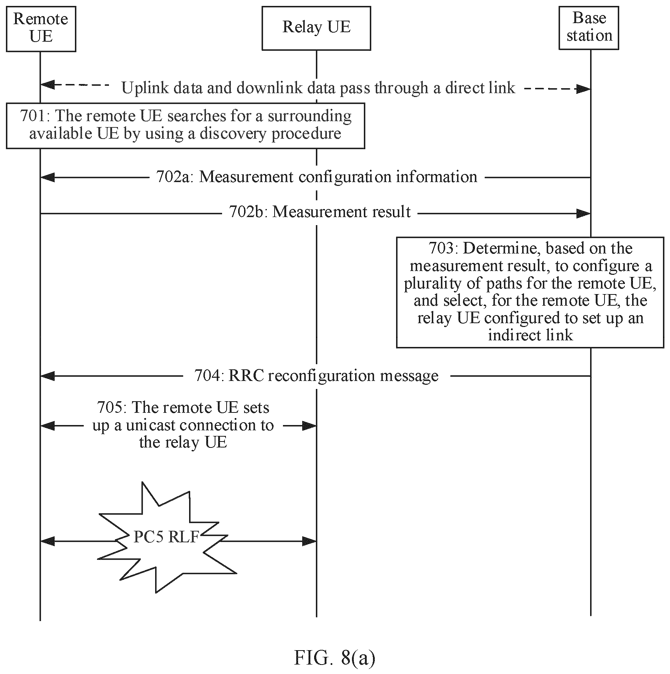

FIG. 8(a) is a diagram of a PC5 RLF occurring between a remote UE and a relay UE. A PC5 RLF occurs between the remote UE and the relay UE, and as a result, the remote UE cannot use a relay service of the relay UE. In this case, when the remote UE detects that a PC5 RLF occurs between the remote UE and the relay UE, if an SRB bearer is configured on a direct link between the remote UE and the base station, the remote UE may send indication information to the base station via the SRB bearer, where the indication information indicates that a PC5 RLF occurs between the remote UE and the relay UE, to trigger relay UE reselection for the remote UE and perform multi-path configuration. For a specific procedure, refer to the embodiment in FIG. 7. Alternatively, the multi-path configuration may be performed for the remote UE based on another method. If no SRB bearer is configured on the direct link between the remote UE and the base station, the remote UE cannot notify the base station that a PC5 RLF occurs between the remote UE and the relay UE. Therefore, the remote UE may trigger a re-setup procedure, and perform the multi-path configuration for the remote UE in the re-setup procedure. For descriptions of the re-setup procedure, refer to the embodiment in FIG. 9.

Example 2: When the remote UE replies the base station with an RRC reconfiguration complete message via a direct link, the remote UE cannot reply the base station with the RRC reconfiguration complete message, that is, a link failure occurs between the remote UE and the base station, due to poor link quality between the remote UE and the relay UE.

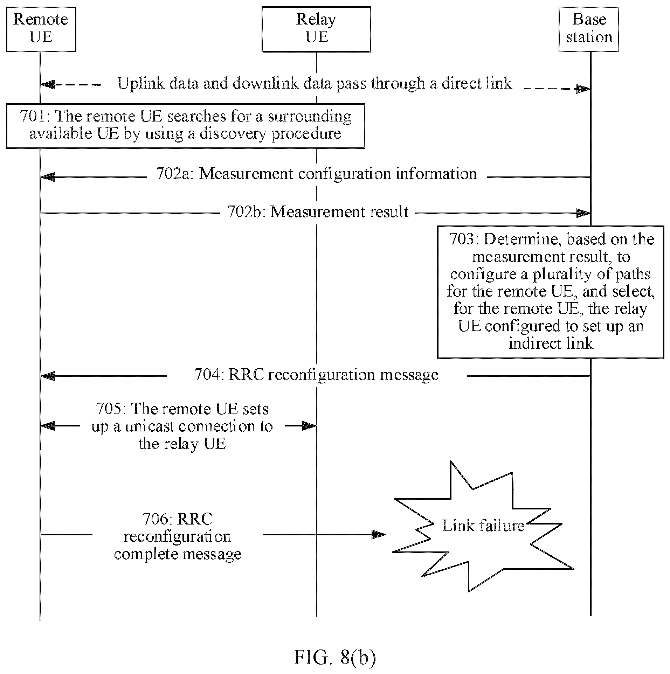

FIG. 8(b) is a diagram of a link failure occurring between a remote UE and a relay UE. In this case, when the remote UE detects that a link failure occurs between the remote UE and the relay UE, if an SRB bearer is configured on an indirect link between the remote UE and the base station, the remote UE may send indication information to the base station via the SRB bearer, where the indication information indicates that a link failure occurs between the remote UE and the relay UE, to trigger the base station to perform re-setup of a connection to the remote UE. If no SRB bearer is configured on the indirect link between the remote UE and the base station, the remote UE cannot notify, via the indirect link, the base station that a link failure occurs between the remote UE and the relay UE. Therefore, the remote UE may trigger a re-setup procedure, and perform multi-path configuration for the remote UE in the re-setup procedure. For descriptions of the re-setup procedure, refer to the embodiment in FIG. 9.

Example 3: A Uu RLF occurs between the relay UE and the base station.

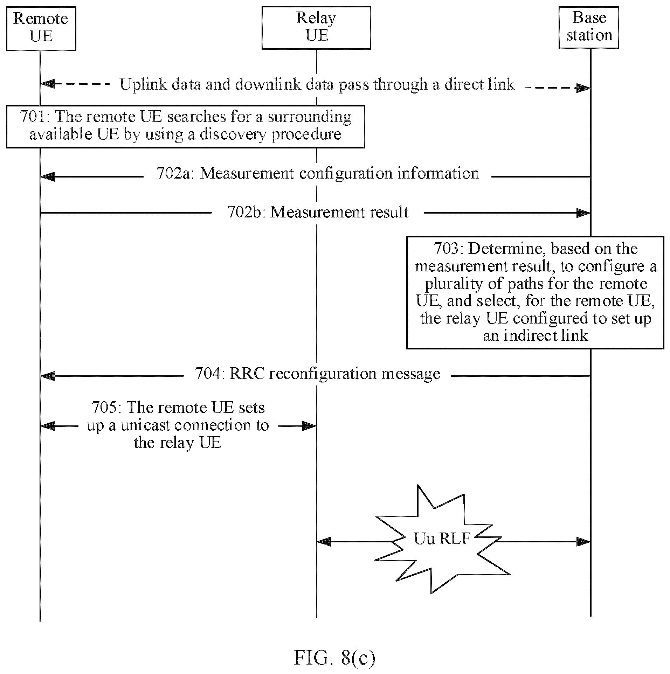

FIG. 8(c) is a diagram of a Uu RLF occurring between a relay UE and a base station. After the relay UE has set up a wireless connection to the base station, a Uu RLF occurs again, and as a result, the remote UE cannot use a relay service of the relay UE. In this case, when detecting the Uu RLF between the relay UE and the base station, the relay UE sends indication information to the remote UE, where the indication information indicates that a Uu RLF occurs between the relay UE and the base station. After the remote UE receives the indication information, if an SRB bearer is configured on a direct link between the remote UE and the base station, the remote UE may send the indication information to the base station via the SRB bearer, where the indication information indicates that a Uu RLF occurs between the relay UE and the base station, to trigger relay UE reselection for the remote UE and perform multi-path configuration. For a specific procedure, refer to the embodiment in FIG. 7. Alternatively, the multi-path configuration may be performed for the remote UE based on another method. If no SRB bearer is configured on the direct link between the remote UE and the base station, the remote UE cannot notify the base station that a Uu RLF occurs between the relay UE and the base station. Therefore, the remote UE may trigger a re-setup procedure, and perform the multi-path configuration for the remote UE in the re-setup procedure. For descriptions of the re-setup procedure, refer to the embodiment in FIG. 9.

Optionally, after receiving the indication information that is from the relay UE and that indicates that a Uu RLF occurs between the relay UE and the base station, the remote UE may release a unicast connection to the relay UE.

Example 4: An RRC setup failure (setup failure) occurs between the relay UE and the base station.

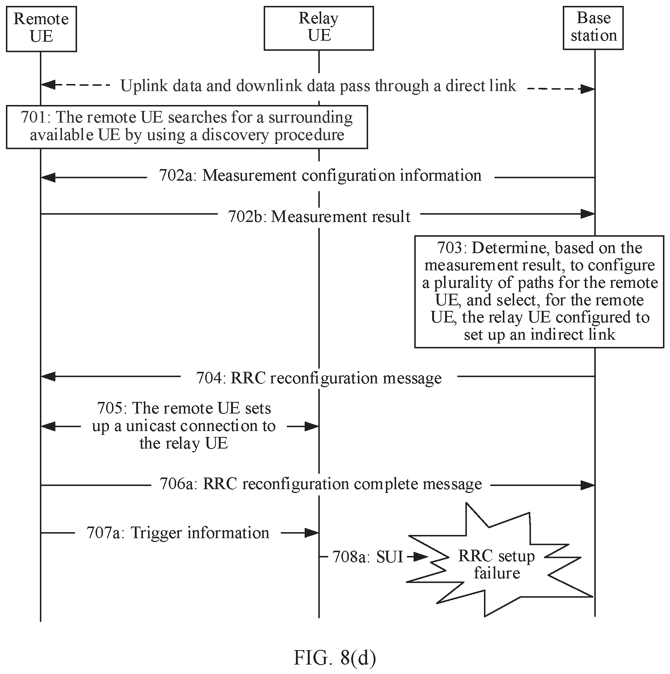

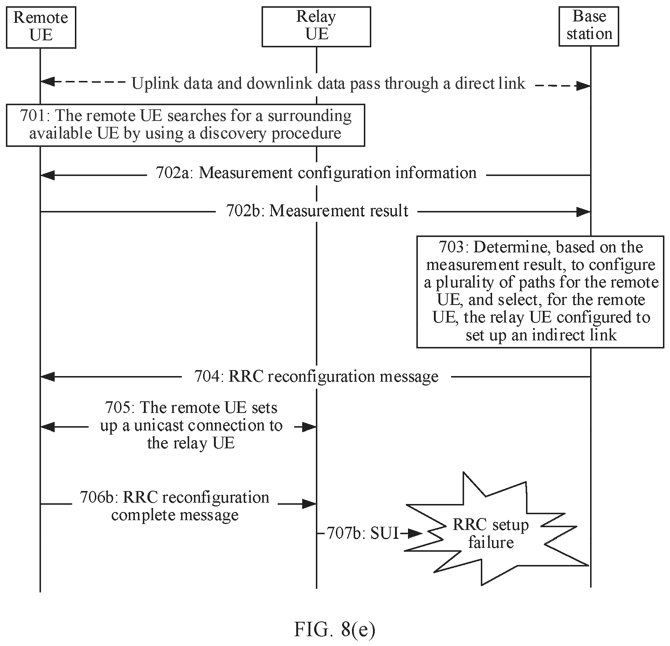

FIG. 8(d) and FIG. 8(e) are diagrams of an RRC setup failure occurring between a relay UE and a base station. An RRC setup failure occurs in a process in which the relay UE sets up a wireless connection to the base station, and as a result, the remote UE cannot use a relay service of the relay UE. In this case, when detecting that the RRC setup failure between the relay UE and the base station, the relay UE sends indication information to the remote UE, where the indication information indicates that an RRC setup failure occurs between the relay UE and the base station, and the indication information may be a PC5 RRC message. After the remote UE receives the indication information, if an SRB bearer is configured on a direct link between the remote UE and the base station, the remote UE may send the indication information to the base station via the SRB bearer, where the indication information indicates that an RRC setup failure occurs between the relay UE and the base station, to trigger relay UE reselection for the remote UE and perform multi-path configuration. For a specific procedure, refer to the embodiment in FIG. 7. Alternatively, the multi-path configuration may be performed for the remote UE based on another method. If no SRB bearer is configured on the direct link between the remote UE and the base station, the remote UE cannot notify the base station that an RRC setup failure occurs between the relay UE and the base station. Therefore, the remote UE may trigger a re-setup procedure, and perform the multi-path configuration for the remote UE in the re-setup procedure. For descriptions of the re-setup procedure, refer to the embodiment in FIG. 9.

Optionally, after receiving the indication information that is from the relay UE and that indicates that an RRC setup failure occurs between the relay UE and the base station, the remote UE may release a unicast connection to the relay UE.

FIG. 9 is a schematic flowchart of a communication method according to an embodiment of this application. The method is a re-setup procedure of a remote UE, and a plurality of paths are configured for the remote UE in the procedure. The method includes the following steps.

Step 901: The remote UE selects a suitable cell and a relay UE in the cell.

For a method for selecting the relay UE by the remote UE, refer to descriptions of step 601f in FIG. 6(f).

Step 902: The remote UE sends an RRC re-setup request message to a base station through a Uu interface.

The base station is a base station in which the suitable cell selected by the remote UE is located. The base station may be the same as or different from a base station that the remote UE accesses before sending the RRC re-setup request message.

When the base station (referred to as a base station 1 below) is different from the base station (referred to as a base station 2 below) that the remote UE accesses before sending the RRC re-setup request message, the base station 1 may obtain context information of the remote UE from the base station 2.

Step 903: When there is no unicast connection between the remote UE and the selected relay UE, the remote UE sets up a unicast connection to the relay UE.

Step 904: The relay UE sends SUI to the base station.

For content of the SUI, refer to descriptions of step 604f in FIG. 6(f).

Step 905: The base station sends an RRC re-setup message to the remote UE.

For content of the RRC re-setup message, refer to descriptions of step 605f in FIG. 6(f).

Step 906a: The base station sends an RRC reconfiguration message to the relay UE.

For content of the RRC reconfiguration message, refer to descriptions in the embodiment in FIG. 6(f).

Step 906b: The relay UE sends an RRC reconfiguration complete message to the base station.

Step 907: The remote UE sends an RRC re-setup complete message to the base station.

For content of the RRC reconfiguration message, refer to descriptions of step 606f in FIG. 6(f).

Step 908: The base station sends the RRC reconfiguration message to the remote UE.

For content of the RRC reconfiguration message, refer to descriptions in the embodiment in FIG. 6(f).

Step 909: The remote UE sends the RRC reconfiguration complete message to the base station.

In the foregoing solution, in the re-setup procedure of the remote UE, the re-setup and the multi-path configuration are completed for the remote UE simultaneously, to help implement quick multi-path configuration of the remote UE.

In the embodiment in FIG. 9, the relay UE selected by the remote UE and the remote UE are in a same cell. In actual application, a relay UE that is not in a same cell as the remote UE may alternatively be selected. This is not limited in this application.

In the embodiment in FIG. 9, the remote UE selects the relay UE. In actual application, the remote UE may alternatively report, to the base station by using an RRC re-setup complete message, information about a plurality of UEs that is obtained through measurement, and the base station selects one UE from the plurality of UEs as the relay UE. After completing the re-setup procedure of the remote UE, the base station configures a plurality of paths for the remote UE based on the selected relay UE.

It may be understood that, to implement functions in the foregoing embodiments, the remote terminal device, the relay terminal device, or the access network device includes corresponding hardware structures and/or software modules for performing various functions. A person skilled in the art should be easily aware that, based on the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

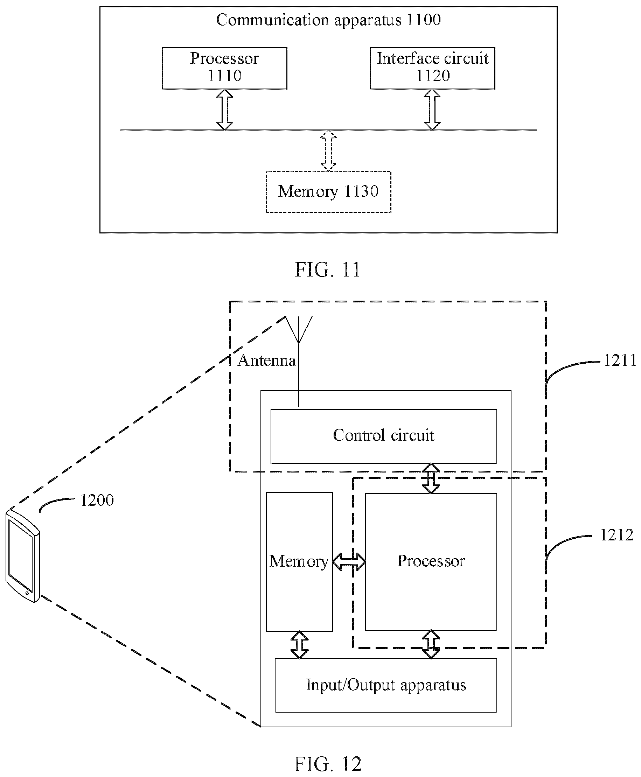

FIG. 10 and FIG. 11 are diagrams of structures of possible communication apparatuses according to embodiments of this application. These communication apparatuses may be configured to implement functions of the remote terminal device, the relay terminal device, or the access network device in the method embodiments of FIG. 6(a), FIG. 6(b), FIG. 6(c), FIG. 6(d), FIG. 6(e), FIG. 6(f), FIG. 7, and FIG. 9. Therefore, beneficial effects of the foregoing method embodiments can also be achieved. In embodiments of this application, the communication apparatus may be a remote terminal device, a relay terminal device, or an access network device, or may be a module (for example, a chip) used in the remote terminal device, the relay terminal device, or the access network device.

The communication apparatus 1000 shown in FIG. 10 includes a processing unit 1010 and a transceiver unit 1020. The communication apparatus 1000 is configured to implement the functions of the remote terminal device, the relay terminal device, or the access network device in the foregoing method embodiments.

When the communication apparatus is configured to perform a function of the remote terminal device in the foregoing method embodiments, the transceiver unit 1020 is configured to receive a configuration message from an access network device through an interface between the remote terminal device and the access network device, where the configuration message includes information about a relay terminal device, and the configuration message is used for RRC reconfiguration. The remote terminal device sends indication information to the relay terminal device based on the information about the relay terminal device, where the indication information triggers the relay terminal device to enter an RRC connected state.

In a possible implementation, the processing unit 1010 is configured to determine, based on an RRC status of the relay terminal device, that the relay terminal device needs to be triggered to enter the RRC connected state.

In a possible implementation, the configuration message further includes status information, and the status information indicates the RRC status of the relay terminal device. The remote terminal device determines the RRC status of the relay terminal device based on the status information.

In a possible implementation, the indication information is a configuration complete message.

In a possible implementation, the transceiver unit 1020 is configured to send the configuration complete message to the access network device through the interface between the remote terminal device and the access network device.

In a possible implementation, the transceiver unit 1020 is configured to send a request message to the relay terminal device, where the request message is for requesting to set up a unicast connection, the request message includes the indication information, and the indication information indicates that the unicast connection is set up to obtain a relay service of the relay terminal device.

In a possible implementation, the indication information is PC5-S signaling, a PC5 RRC message, or SL MAC CE signaling.

In a possible implementation, the processing unit 1010 is configured to determine that a link failure or a connection failure occurs between the remote terminal device and the relay terminal device. The transceiver unit 1020 is configured to send first failure indication information to the access network device, where the first failure indication information indicates that a link failure or a connection failure occurs between the remote terminal device and the relay terminal device.

In a possible implementation, the processing unit 1010 is configured to determine that a link failure or a connection failure occurs between the remote terminal device and the access network device. The transceiver unit 1020 is configured to send second failure indication information to the access network device via the relay terminal device, where the second failure indication information indicates that a link failure or a connection failure occurs between the remote terminal device and the access network device.

In a possible implementation, the transceiver unit 1020 is configured to: receive third failure indication information from the relay terminal device, where the third failure indication information indicates that a link failure or a connection failure occurs between the relay terminal device and the access network device; and send fourth failure indication information to the access network device, where the fourth failure indication information indicates that a link failure or a connection failure occurs between the relay terminal device and the access network device.

In a possible implementation, the transceiver unit 1020 is further configured to send information about at least one candidate terminal device to the access network device through the interface between the remote terminal device and the access network device, where the at least one candidate terminal device includes the relay terminal device, and the information about the at least one candidate terminal device includes signal quality of the candidate terminal device and/or information indicating whether the candidate terminal device supports multi-path relay.

In a possible implementation, the transceiver unit 1020 is further configured to receive a discovery message from the candidate terminal device, where the discovery message includes information indicating whether the candidate terminal device supports multi-path relay.

In a possible implementation, the transceiver unit 1020 is further configured to receive a discovery message from the candidate terminal device, where identification information of the candidate terminal device that corresponds to the discovery message indicates whether the candidate terminal device supports multi-path relay.

When the communication apparatus is configured to perform a function of the relay terminal device in the foregoing method embodiments, the transceiver unit 1020 is configured to: receive indication information from a remote terminal device, where the indication information triggers an access network device to enter an RRC connected state; and send sidelink UE information to the access network device, where the sidelink UE information includes information about the remote terminal device and/or information about the relay terminal device.

In a possible implementation, the processing unit 1010 is configured to enter the RRC connected state based on the indication information.

In a possible implementation, the indication information is PC5-S signaling, a PC5 RRC message, SL MAC CE signaling, or a configuration complete message from the relay terminal device.

In a possible implementation, the transceiver unit 1020 is configured to receive a request message from the remote terminal device, where the request message is for requesting to set up a unicast connection, the request message includes the indication information, and the indication information indicates that the unicast connection is set up to obtain a relay service of the relay terminal device.

In a possible implementation, the transceiver unit 1020 is configured to receive notification information from the access network device, where the notification information is used by the relay terminal device to determine whether control plane signaling needs to be forwarded for the remote terminal device. The processing unit 1010 is configured to determine, based on the notification information, that the control plane signaling needs to be forwarded for the remote terminal device, or that the control plane signaling does not need to be forwarded for the remote terminal device.

In a possible implementation, the processing unit 1010 is configured to determine that a link failure or a connection failure occurs between the relay terminal device and the access network device. The transceiver unit 1020 is configured to send failure indication information to the remote terminal device, where the failure indication information indicates that a link failure or a connection failure occurs between the relay terminal device and the access network device.

In a possible implementation, the transceiver unit 1020 is further configured to send a discovery message to the remote terminal device, where the discovery message includes information indicating that the relay terminal device supports multi-path relay.

In a possible implementation, the transceiver unit 1020 is further configured to send a discovery message to the remote terminal device, where identification information of the relay terminal device that corresponds to the discovery message indicates that the relay terminal device supports multi-path relay.

When the communication apparatus is configured to perform a function of the access network device in the foregoing method embodiments, the transceiver unit 1020 is configured to: send a configuration message to a remote terminal device through an interface between the remote terminal device and the access network device, where the configuration message includes information about a relay terminal device and status information, the status information indicates an RRC status of the relay terminal device, and the configuration message is used for RRC reconfiguration; and receive sidelink UE information from the relay terminal device, where the sidelink UE information includes the information about the relay terminal device and the information about the relay terminal device.

In a possible implementation, the transceiver unit 1020 is configured to receive a configuration complete message in response to the configuration message from the remote terminal device through the interface between the remote terminal device and the access network device.

In a possible implementation, the transceiver unit 1020 is configured to receive a configuration complete message in response to the configuration message from the remote terminal device via the relay terminal device.

In a possible implementation, the transceiver unit 1020 is configured to send notification information to the relay terminal device, where the notification information is used by the relay terminal device to determine whether control plane signaling is needed to be forwarded for the remote terminal device, and the second configuration message is used for RRC reconfiguration.

When the communication apparatus is configured to perform a function of the remote terminal device in the foregoing method embodiments, the processing unit 1010 is configured to select a relay terminal device. The transceiver unit 1020 is configured to: send an RRC re-setup request message to an access network device; receive an RRC re-setup message from the access network device; and send an RRC re-setup complete message to the access network device, where the RRC re-setup complete message includes information about the relay terminal device and/or information about the remote terminal device.

In a possible implementation, the processing unit 1010 is configured to set up a unicast connection between the relay terminal device before the transceiver unit 1020 sends the RRC re-setup complete message to the access network device.

For more detailed descriptions about the processing unit 1010 and the transceiver unit 1020, directly refer to related descriptions in the foregoing method embodiments. Details are not described herein.

The communication apparatus 1100 shown in FIG. 11 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130 configured to store instructions to be executed by the processor 1110, input data required by the processor 1110 to run instructions, or data generated after the processor 1110 runs instructions.

The communication apparatus 1100 may be the remote terminal device, the relay terminal device, or the access network device in the foregoing method embodiments, or may be a module (for example, a chip) used in the remote terminal device, the relay terminal device, or the access network device.

When the communication apparatus 1100 is configured to implement the foregoing method embodiments, the processor 1110 is configured to implement a function of the processing unit 1010, and the interface circuit 1120 is configured to implement a function of the transceiver unit 1020.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

FIG. 12 is a diagram of a structure of a terminal device. The terminal device is applicable to an operation performed by the remote terminal device or the relay terminal device in any one of the foregoing method embodiments. For ease of description, FIG. 12 shows only main components of the terminal device. The terminal device 1200 shown in FIG. 12 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user.

After the terminal device is powered on, the processor may read the software program in the memory, parse and execute instructions of the software program, and process the data of the software program. When data needs to be sent in a wireless manner, the processor performs baseband processing on the to-be-sent data, and outputs a baseband signal to the control circuit. The control circuit processes the baseband signal to obtain a radio frequency signal, and sends the radio frequency signal in an electromagnetic wave form via the antenna. When data is sent to the terminal device, the control circuit receives a radio frequency signal via the antenna. The radio frequency signal is further converted into a baseband signal, and the baseband signal is output to the processor. The processor converts the baseband signal into data, and processes the data.

For ease of description, FIG. 12 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In an example, the antenna and the control circuit that have a transceiver function may be considered as a transceiver unit 1211 of the terminal device 1200, and the processor that has a processing function may be considered as a processing unit 1212 of the terminal device 1200. As shown in FIG. 12, the terminal device 1200 includes the transceiver unit 1211 and the processing unit 1212. The transceiver unit may also be referred to as a transceiver, a transceiver machine, a transceiver apparatus, or the like. Optionally, a component that is in the transceiver unit 1211 and that is configured to implement a receiving function may be considered as a receiving unit, and a component that is in the transceiver unit 1211 and that is configured to implement a sending function may be considered as a sending unit. In other words, the transceiver unit 1211 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like. Optionally, the receiving unit and the sending unit may be one integrated unit, or may be a plurality of independent units. The receiving unit and the sending unit may be in one geographical position, or may be distributed in a plurality of geographical positions.

An embodiment of this application further provides a communication apparatus, including a processor coupled to a memory. The processor is configured to call a program stored in the memory, to perform operations performed by the remote terminal device, the relay terminal device, or the access network device in the foregoing method embodiments. The memory may be located inside or outside the apparatus. In addition, there may be one or more processors.

An embodiment of this application provides a communication apparatus, including a processor and a memory. The memory is configured to store computer instructions. When the apparatus runs, the processor executes the computer instructions stored in the memory, to perform operations performed by the remote terminal device, the relay terminal device, or the access network device in the foregoing method embodiments.

An embodiment of this application further provides a chip system, including a processor. The processor is configured to perform operations performed by the remote terminal device, the relay terminal device, or the access network device in the foregoing method embodiments.

An embodiment of this application further provides a communication system, including the remote terminal device and the relay terminal device in the foregoing method embodiments. Optionally, the communication system further includes the access network device in the method embodiments.

An embodiment of this application further provides a computer-readable storage medium. The computer-readable storage medium stores instructions. When the instructions run on a communication apparatus, operations performed by the remote terminal device, the relay terminal device, or the access network device in the foregoing method embodiments are performed.

An embodiment of this application further provides a computer program product. The computer program product includes a computer program or instructions. When the computer program or the instruction are run by a communication apparatus, operations performed by the remote terminal device, the relay terminal device, or the access network device in the foregoing method embodiments are performed.

The method steps in embodiments of this application may be implemented in a hardware manner, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or terminal as discrete components.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer program or instructions are loaded and executed on a computer, all or some of the procedures or functions in embodiments of this application are performed. The computer may be a general-purpose computer, a special-purpose computer, a computer network, a base station, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

**In** embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

In this application, "at least one" means one or more, and "plurality of" means two or more. "And/or" describes an association relationship between associated objects, and indicates that three relationships may exist. For example, A and/or B may indicate the following cases: Only A exists, both A and B exist, and only B exists, where A and B may be singular or plural. **In** the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a configuration message from an access network device through an interface between a remote terminal device and the access network device, wherein the configuration message comprises information about a relay terminal device; and
sending indication information to the relay terminal device based on the information about the relay terminal device, wherein the indication information triggers the relay terminal device to enter an RRC connected state.

2. The method according to claim 1, wherein the method further comprises:
determining, based on an RRC status of the relay terminal device, that the relay terminal device needs to be triggered to enter the RRC connected state.

3. The method according to claim 2, wherein the configuration message further comprises status information, and the status information indicates the RRC status of the relay terminal device; and
the method further comprises:
determining the RRC status of the relay terminal device based on the status information.

4. The method according to claim 2 or 3, wherein the indication information is a configuration complete message in response to the configuration message.

5. The method according to any one of claims 1 to 3, wherein the method further comprises:
sending a configuration complete message in response to the configuration message to the access network device through the interface between the remote terminal device and the access network device.

6. The method according to any one of claims 1 to 3 and claim 5, wherein
the sending indication information to the relay terminal device comprises: sending a request message to the relay terminal device, wherein the request message comprises the indication information, the request message is for requesting to set up a unicast connection, and the indication information indicates that the unicast connection is set up to obtain a relay service of the relay terminal device; or
the indication information is a request message for requesting to set up a unicast connection related to a relay service.

7. The method according to any one of claims 1 to 3 and claim 5, wherein the indication information is PC5-S signaling, a PC5 RRC message, or sidelink media access control control element SL MAC CE signaling.

8. The method according to any one of claims 1 to 7, wherein the method further comprises:
determining that a link failure or a connection failure occurs between the remote terminal device and the relay terminal device, and sending first failure indication information to the access network device, wherein the first failure indication information indicates that a link failure or a connection failure occurs between the remote terminal device and the relay terminal device.

9. The method according to any one of claims 1 to 7, wherein the method further comprises:
determining that a link failure or a connection failure occurs between the remote terminal device and the access network device, and sending second failure indication information to the access network device via the relay terminal device, wherein the second failure indication information indicates that a link failure or a connection failure occurs between the remote terminal device and the access network device.

10. The method according to any one of claims 1 to 7, wherein the method further comprises:
receiving third failure indication information from the relay terminal device, wherein the third failure indication information indicates that a link failure or a connection failure occurs between the relay terminal device and the access network device; and
sending fourth failure indication information to the access network device, wherein the fourth failure indication information indicates that a link failure or a connection failure occurs between the relay terminal device and the access network device.

11. The method according to any one of claims 1 to 10, wherein the method further comprises:
sending information about at least one candidate terminal device to the access network device through the interface between the remote terminal device and the access network device, wherein the at least one candidate terminal device comprises the relay terminal device, and the information about the at least one candidate terminal device comprises signal quality of the candidate terminal device and/or information indicating whether the candidate terminal device supports multi-path relay.

12. The method according to claim 11, wherein the method further comprises:
receiving a discovery message from the candidate terminal device, wherein the discovery message comprises the information indicating whether the candidate terminal device supports multi-path relay.

13. The method according to claim 11, wherein the method further comprises:
receiving a discovery message from the candidate terminal device, wherein identification information of the candidate terminal device that corresponds to the discovery message indicates whether the candidate terminal device supports multi-path relay.

14. A communication method, comprising:
receiving indication information from a remote terminal device, wherein the indication information triggers the access network device to enter an RRC connected state; and
sending sidelink UE information to the access network device, wherein the sidelink UE information comprises information about the remote terminal device and/or information about a relay terminal device.

15. The method according to claim 14, wherein the method further comprises:
entering the RRC connected state based on the indication information.

16. The method according to claim 14 or 15, wherein the indication information is PC5-S signaling, a PC5 RRC message, sidelink media access control control element SL MAC CE signaling, or a configuration complete message from the relay terminal device.

17. The method according to claim 14 or 15, wherein the receiving indication information from a remote terminal device comprises: receiving a request message from the remote terminal device, wherein the request message comprises the indication information, the request message is for requesting to set up a unicast connection, and the indication information indicates that the unicast connection is set up to obtain a relay service of the relay terminal device; or
the indication information is a request message for requesting to set up a unicast connection related to a relay service.

18. The method according to any one of claims 14 to 17, wherein the method further comprises:
determining that a link failure or a connection failure occurs between the relay terminal device and the access network device, and sending failure indication information to the remote terminal device, wherein the failure indication information indicates that a link failure or a connection failure occurs between the relay terminal device and the access network device.

19. The method according to any one of claims 14 to 18, wherein the method further comprises:
sending a discovery message to the remote terminal device, wherein the discovery message comprises information indicating that the relay terminal device supports multi-path relay.

20. The method according to any one of claims 14 to 18, wherein the method further comprises:
sending a discovery message to the remote terminal device, wherein identification information of the relay terminal device that corresponds to the discovery message indicates that the relay terminal device supports multi-path relay.

21. A communication method, wherein the method comprises:
sending a configuration message to a remote terminal device through an interface between the remote terminal device and an access network device, wherein the configuration message comprises information about a relay terminal device and status information, and the status information indicates an RRC status of the relay terminal device; and
receiving sidelink UE information from the relay terminal device, wherein the sidelink UE information comprises the information about the relay terminal device and information about the remote terminal device.

22. The method according to claim 21, wherein the method further comprises:
receiving a configuration complete message in response to the configuration message from the remote terminal device through the interface between the remote terminal device and the access network device; or
receiving a configuration complete message in response to the configuration message from the remote terminal device via the relay terminal device.

23. The method according to claim 21 or 22, wherein the method further comprises:
receiving information about at least one candidate terminal device from the remote terminal device through the interface between the remote terminal device and the access network device, wherein the information about the at least one candidate terminal device comprises signal quality of the candidate terminal device and/or information indicating whether the candidate terminal device supports multi-path relay; and
selecting the relay terminal device from the at least one candidate terminal device based on the information about the at least one candidate terminal device.

24. A communication method, wherein the method comprises:
determining whether a relay terminal device needs to forward control plane signaling for a remote terminal device; and
sending notification information to the relay terminal device, wherein the notification information is for determining whether the relay terminal device needs to forward the control plane signaling for the remote terminal device.

25. The method according to claim 24, wherein the determining whether a relay terminal device needs to forward control plane signaling for a remote terminal device comprises:
when the remote terminal device can receive the control plane signaling from an access network device through an interface between the remote terminal device and the access network device, determining that the relay terminal device does not need to forward the control plane signaling for the remote terminal device; or
when the remote terminal device cannot receive the control plane signaling from an access network device through an interface between the remote terminal device and the access network device, determining that the relay terminal device needs to forward the control plane signaling for the remote terminal device.

26. A communication method, wherein the method comprises:
receiving notification information from an access network device, wherein the notification information is for determining whether a relay terminal device needs to forward control plane signaling for a remote terminal device; and
determining, based on the notification information, that the control plane signaling needs to be forwarded for the remote terminal device, or that the control plane signaling does not need to be forwarded for the relay terminal device.

27. The method according to claim 26, wherein the notification information indicates a relay service type provided by the relay terminal device; and
the determining, based on the notification information, that the control plane signaling needs to be forwarded for the remote terminal device, or that the control plane signaling does not need to be forwarded for the relay terminal device comprises:
determining, based on the relay service type provided by the relay terminal device, that the control plane signaling needs to be forwarded for the remote terminal device, or that the control plane signaling does not need to be forwarded for the relay terminal device.

28. A communication apparatus, comprising a module configured to perform the method according to any one of claims 1 to 13, a module configured to perform the method according to any one of claims 14 to 20, a module configured to perform the method according to any one of claims 21 to 23, a module configured to perform the method according to claim 24 or 25, or a module configured to perform the method according to claim 26 or 27.

29. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 13, the method according to any one of claims 14 to 20, the method according to any one of claims 21 to 23, the method according to claim 24 or 25, or the method according to claim 26 or 27 via a logic circuit or by executing code instructions.

30. A computer program product, wherein the computer program product comprises a computer program, when the computer program is executed by a communication apparatus, the method according to any one of claims 1 to 27 is implemented.

31. A computer-readable storage medium, wherein the storage medium stores a computer program or instructions, and when the computer program or the instructions are executed by a communication apparatus, the method according to any one of claims 1 to 27 is implemented.

32. A communication system, comprising a remote terminal device configured to perform the method according to any one of claims 1 to 13 and a relay terminal device configured to perform the method according to any one of claims 14 to 20.

33. The system according to claim 32, wherein the system further comprises an access network device configured to perform the method according to any one of claims 21 to 23.

34. A communication system, comprising an access network device configured to perform the method according to claim 24 or 25 and a relay terminal device configured to perform the method according to claim 26 or 27.

35. A chip system, comprising a processor, wherein the processor is configured to perform the method according to any one of claims 1 to 27.
